# EUROPEAN PATENT APPLICATION

(11) **EP 4 664 303 A1**
(43) Date of publication of application: **17.12.2025**
(21) Application number: 25173950.4
(22) Date of filing: 02.05.2025
(51) Int. Cl.: G06F 13/42, H04L 25/00, G06F 11/30

(54) **ENHANCED BIT BORROWING TECHNIQUES FOR STREAMING DATA PROTOCOLS**

(30) Priority: 13.06.2024 US 202418742159
(71) Applicant: Intel Corporation, Santa Clara, CA 95054 (US)
(72) Inventor: BALLANTYNE, Wayne, Chandler, AZ, 85286 (US); BAYS, Laurence, Allentown, PA, 18103 (US); PAWLIUK, Peter, Tempe, AZ, 85283 (US)
(74) Representative: Maiwald GmbH

(57) **Abstract**

This disclosure describes systems, methods, and devices for placing bits in an isochronous data stream from a first data port to a second data port. A device may inject, using a first port, based on a periodicity less than a defined frame rate of a data stream comprising multiple frames, a status or control bit in place of one or more low-order bits, reserved bits, or unused bits of a frame of the data stream, wherein the frame includes one or more data words; receive, using a second port synchronized to the periodicity, the data stream from the first port; extract, using the second port, based on the periodicity, the status or control bit; and extract, using the second port, a remainder of the frame.

## Description

### TECHNICAL FIELD

This disclosure generally relates to systems and methods for streaming data and, more particularly, to bit borrowing techniques for streaming data protocols.

### BACKGROUND

Devices use a variety of communication protocols that define ways to stream data. Sometimes it is desirable to merge in a status or control bit into the data stream. Adding a status/control bit to a data stream may reduce the data stream resolution, require more bits in the data stream, and may waste bandwidth.

### BRIEF DESCRIPTION OF THE DRAWINGS

FIG. 1 illustrates an example system for bit borrowing for streaming data, in accordance with one or more example embodiments of the present disclosure.
FIG. 2 illustrates an example JESD system for bit borrowing for streaming data, in accordance with one or more example embodiments of the present disclosure.
FIG. 3 illustrates an example architecture for bit insertion and extraction for the bit borrowing of FIG. 1 and FIG. 2, in accordance with one or more example embodiments of the present disclosure.
FIG. 4A is a graph showing error vector magnitude (EVM) root mean squared (RMS) with an intermittent 1-bit least significant bit borrowing using the architecture of FIG. 3, in accordance with one or more example embodiments of the present disclosure.
FIG. 4B is a graph showing EVM peaks with an intermittent 1-bit least significant bit borrowing using the architecture of FIG. 3, in accordance with one or more example embodiments of the present disclosure.
FIG. 4C is a graph showing signal-to-quantization-noise ratio (SQNR) with an intermittent 1-bit least significant bit borrowing using the architecture of FIG. 3, in accordance with one or more example embodiments of the present disclosure.
FIG. 5 illustrates an example architecture for bit insertion and extraction for the bit borrowing of FIG. 1 and FIG. 2, in accordance with one or more example embodiments of the present disclosure.
FIG. 6A is a graph showing EVM RMS with an intermittent 1-bit least significant bit borrowing using the architecture of FIG. 5, in accordance with one or more example embodiments of the present disclosure.
FIG. 6B is a graph showing EVM peaks with an intermittent 1-bit least significant bit borrowing using the architecture of FIG. 5, in accordance with one or more example embodiments of the present disclosure.
FIG. 6C is a graph showing SQNR with an intermittent 1-bit least significant bit borrowing using the architecture of FIG. 5, in accordance with one or more example embodiments of the present disclosure.
FIG. 7 illustrates an example architecture for bit insertion and extraction for the bit borrowing of FIG. 1 and FIG. 2, in accordance with one or more example embodiments of the present disclosure.
FIG. 8 illustrates a flow diagram of illustrative process for bit borrowing for streaming data, in accordance with one or more example embodiments of the present disclosure.
FIG. 9. illustrates a network, in accordance with one or more example embodiments of the present disclosure.
FIG. 10 schematically illustrates a wireless network, in accordance with one or more example embodiments of the present disclosure.
FIG. 11 is a block diagram illustrating components, in accordance with one or more example embodiments of the present disclosure.
FIG. 12 is a block diagram of an example Open-RAN (O-RAN) architecture, in accordance with one or more example embodiments of the present disclosure.
FIG. 13 is an example O-RAN logical architecture corresponding to the O-RAN architecture of FIG. 12, in accordance with one or more example embodiments of the present disclosure.

### DETAILED DESCRIPTION

The following description and the drawings sufficiently illustrate specific embodiments to enable those skilled in the art to practice them. Other embodiments may incorporate structural, logical, electrical, process, algorithm, and other changes. Portions and features of some embodiments may be included in, or substituted for, those of other embodiments. Embodiments set forth in the claims encompass all available equivalents of those claims.

When devices transfer data streams, such as between a baseband chip and a transceiver, the data streams may be limited in terms of the number of bits in them. A status bit, such as a bit representing an overload condition, may be included in a data stream. Data stream protocols may define the limitations of data streams, such as their size. Inclusion of the status bit could result in reduced resolution of the data stream by replacing a bit of the data stream with the status bit, or increased bits used in the data stream.

For example, the JEDEC-defined JESD (JESD204B/C/D) protocol is widely used in Remote Radio heads (also called "O-RU" in the Open-RAN (O-RAN) standard) to transfer time-domain I/Q (in-phase and quadrature) data from a baseband chip to a radiofrequency (RF) Transceiver (XCVR). JESD is a streaming protocol where, in an RF-related deployment I or Q word sizes ranging from 12 to 24 bits are used in each frame, and a frame contains multiple octets (8-bit entities). The JESD protocol, and other protocols, have certain restrictions for the frame size (e.g., which must be an integer number of octets - F - in JESD) and the size of the data word itself (N'in JESD, which must be an integer number of nibbles, with a nibble being a 4-bit field). This means that inclusion of a status bit in the data stream could result in reduced data stream resolution and wasted bandwidth, as explained further below.

In an example, a JESD frame with N'=16, F=4, and the word size being 16, the JESD frame may include two words of 16 bits each: I₁₋₀-I₁₋₁₅, and Q₁₋₀-Q₁₋₁₅. When using a status bit "STS" (e.g., for a receiver overload indicator, such as to represent an overload condition for a receiver amplifier), one of the bits of the two 16-bit words would have to be replaced by the status bit. For example, the I word may be reduced to 15 bits: I₁₋₁-I₁₋₁₅. The use of the status bit therefore causes the following problems: (1) The I/Q resolution is reduced from 16 to 15 bits, leading to a lower error vector magnitude (EVM) floor and less dynamic range, and (2) the STS bit may change at a lower rate than the I/Q data, so sending the STS bit at the same rate as the I or Q word results in wasted bandwidth due to sending the STS bit more often than necessary.

The approach to STS bit inclusion described above leads to an increased wire count, higher bandwidth use, or reduced RF performance. Therefore, it is desirable to provide a method of transferring a status bit or bits synchronously with a data stream while avoiding reduction of the data stream resolution and avoiding increased bandwidth.

Existing solutions include increasing the word size to avoid reduced resolution while sending the status bit in every word. Maintaining a 16-bit fixed point resolution word in JESD and sending the status bit (e.g., automatic gain control overload) necessitates use of a 20-bit word including 16 bits for I or Q, one bit for automatic gain control overload, and three dummy bits. Increasing the JESD word size N' approach increases the total JESD bit rate required, leading to an increase in the number of serializer/deserializer (SERDES, e.g., physical layer - PHY) lanes required, or a higher bit rate per lane. SERDES links, for example, are often used to route high speed data from one integrated circuit (IC) to another, and commonly implemented as low-level differential signaling (LVDS) transmitters and receivers with a sampling clock derived from the data stream. Either way, the result is higher power consumption and more printed circuit board transmission line routing.

Another existing approach is to send the status bits over a sideband channel, such as a serial peripheral interface (SPI) or I2C. Using a SPI or I2C sideband channel increases wire count and causes difficulty time-aligning the status bit with the I/Q stream. While the SPI or I2C interface may be needed anyway to initially configure the transceiver, it may not be customary to use it for real-time operation.

JESD204B/C/D offers methods to send 1-4 status bits per word, either 1-4 bits per word, sent along with each word, or all status bits sent grouped together at the end of the frame, but still the same total overhead. In JESD terminology, these two options are defined by the CS configuration bit. JESD204C also offers a command channel where up to 19 command bits can be sent every multiblock (2048 bits), but only if FEC (forward error correction) is not enabled. The protocol must build in an overhead of (2074/2048) to support this, whether any/all the bits of the command channel are used or not. While the JESD204C command channel provides sufficient bandwidth to send commands, the latency, overhead, and update rate are fixed, and it only works if FEC is not enabled. In higher rate protocols such as JESD204D, FEC is mandatory, and the command channel is not implemented.

The enhanced techniques herein address the ADC (analog-to-digital conversion) or DAC (digital-to-analog conversion) data transfer between two sub-systems or integrated circuits as defined by JESD, RF I/Q data transfers defined by JESD and other protocols, and real RF or other streaming data defined by JESD and other protocols. For example, the enhanced techniques herein may apply to the I2S audio serial protocol, video streaming protocols, and the like.

In one or more embodiments, an enhanced bit borrowing scheme may allow for improved performance while using the status bit. In the enhanced bit borrowing scheme, the normal data word resolution is maintained, but every P frames, the frame may be modified such that the LSB (least significant bit) of one of the words is replaced with a control or status bit. This leads to a minimal performance penalty for many classes of streaming data, but no JESD (or other streaming protocol) bandwidth increase.

In one or more embodiments, an isochronous data stream may be sent from one data port to a second data port at a defined word rate, with the data stream transmitter periodically injecting one or more status or control bits in place of least significant data bits, at a rate lower than the defined word rate; where the second data port is synchronized to the periodicity of the injected status bits and can properly receive and extract them along with the remainder of the data word. The data ports may be serial low-voltage differential interfaces, for example. The data protocol may be JESD or another data streaming protocol. The data may be RF data, audio frequency data, video data, or the like.

In one or more embodiments, new logic may be added to insert the overload status bit "OVLD" every Pth frame (e.g., per RX chain). In order to perform this operation, a frame counter input may be needed to produce a strobe or pulse every Pth frame, which enables the substitution of the OVLD bit for the word's LSB. The bit borrowing logic may result in a new frame format. For example, 16-bit I/Q data, with the OVLD status bit substituted every P frames, may be received by a JESD transport layer configured with CS=0, indicating that no control or status bits are sent in each word. The result is full 16-bit resolution per I or Q word, the LSB substitution every P frames notwithstanding.

In one or more embodiments, the receiver side may need to know which frames on the transmitter side substituted the OVLD bit. While the periodicity parameter P be configured in advance for both transmitter TX and receiver RX, the first frame in which OVLD bit substitution occurred must also be known. This frame synchronization may be achieved using the JESD SYS_REF inputs fed to both JESD TX and RX on each SOC (e.g., using JESD). P may be selected such that there is a constant integer number of P-Frames in an JESD204D Alignment Block or JESD204C Extended Multiframe, as this is the boundary upon which data begins to flow in the JESD204 TX and RX paths. As long as frames are counted from the beginning of data flow, a device should be able to identify the Pth Frame in which to inject/extract the OVLD bit. Every Pth frame, a strobe or other control may be generated that enables the insertion of the status bit in the frame for the TX stream. On the RX side, the synchronized frame counting scheme ensures that, when this Pth frame is received by the transport layer, the OVLD bit will be extracted.

When an LSB bit of a waveform sample is borrowed for another purpose (e.g., the OVLD/STS bit), the signal quality of the waveform will be reduced. The more often a bit is borrowed, the worse the signal quality will be. Signal quality may be measured using error vector magnitude (EVM) and signal to quantization noise ratio (SQNR) metrics.

Using the basic setup shown above, a simulation was performed with a 12-bit IQ waveform being sent over JESD. The LSB bits were borrowed every N samples. In one case, the bits were borrowed from the real samples (I) only, and in the other case, bits were borrowed from both the real (I) and imaginary (Q) parts. The RMS signal level was set to be -36dBFS to represent a received wireless signal at a moderate strength level. If the bit is borrowed in every cycle (N=1), the degradation is 8.5dB for borrowing from both I and Q, and 6dB for borrowing from only I. When the bit is borrowed less often, using the enhanced techniques herein, this degradation is significantly reduced.

Often, the data is rounded from a higher precision to a lower precision prior to transmission over JESD. In one example, the samples were rounded from 16-bits to 12-bits. When the LSB bit is borrowed, there is a 1.5 bit impact on the signal quality because the proper rounding is lost along with the LSB. However, if the samples could be rounded to 11-bits only when the extra bit is being inserted, then proper rounding may be maintained and the ½ bit of performance may be recovered. It would require that this borrowed bit be replaced by a zero after extraction on the JESD Rx side. The architecture would also prevent DC problems due to the injection.

If the injected data bits are not evenly distributed between 1s and 0s, then a direct current (DC) offset will be introduced to the signal. For an NR (New Radio - 3GPP 5th Generation) waveform, a DC offset is intolerable because there is a subcarrier allocated at DC. There are three ways to prevent this DC offset problem: (1) Use the adaptive rounding scheme proposed above. In this case, the proper rounding is maintained and the inserted bits are removed (zeroed-out). (2) Apply convergent rounding (i.e., rounding to nearest even value) on the sample prior to insertion of the extra data bit in the LSB. On the Rx side, the extra data bit would need to be removed (zeroed-out). (3) On the JESD Rx side, replace the extra data bit with a random pattern of 1s and 0s. This does not require any special rounding on the Tx side.

In one or more embodiments, the enhanced bit borrowing herein may apply to audio streaming protocols. A PCM (pulse-code modulation) audio stream is another example of mission mode data where an occasional "borrowing" of an LSB will have no perceptible impact on user quality. This is especially true if the status/control bits involved are for an audio gain change, which would happen infrequently. The bit-borrowing frame also may be used to substitute two different status bits in the I word and Q word, rather than in either the I or Q word only. The use of the bit-borrowing herein may apply to real-valued RF word representations, in addition to the complex I/Q format. The bit borrowing herein also may apply to any streaming protocol where an occasional bit error is acceptable from an application standpoint. (e.g., a video stream).

There are numerous technical benefits to the enhanced bit borrowing herein. For example, a data word size can be decreased because it is not necessary to reserve a fixed number of bits per word to send status or control bits. This leads to lower power consumption, or fewer SERDES links required, or both. In addition, the update frequency for the status bits can be based on the dynamics of the physical circuit or process represented by the status bits, rather than having to match the data word rate of primary data stream being sent over the SERDES link.

The above descriptions are for purposes of illustration and are not meant to be limiting. Numerous other examples, configurations, processes, algorithms, etc., may exist, some of which are described in greater detail below. Example embodiments will now be described with reference to the accompanying figures.

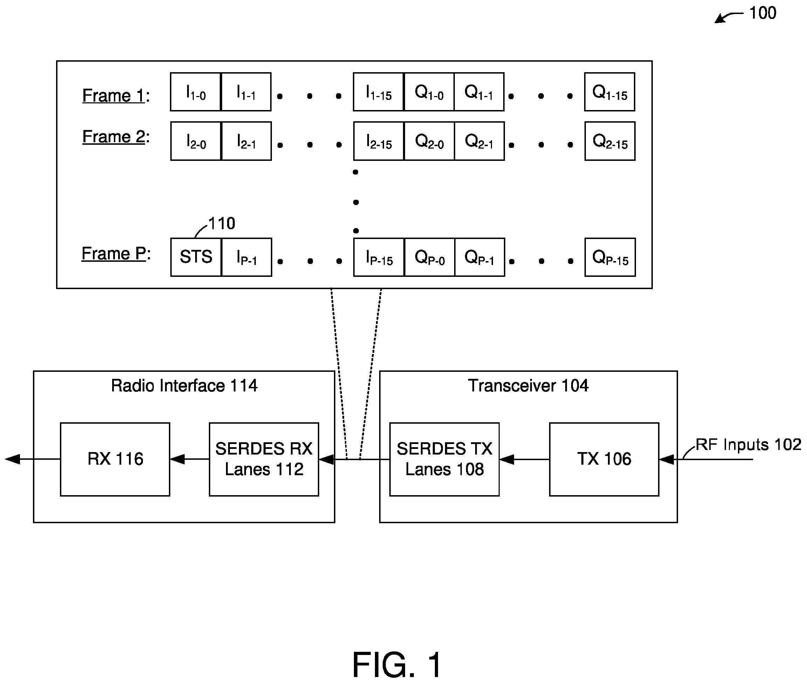

FIG. 1 illustrates an example system 100 for bit borrowing for streaming data from a single RF input, in accordance with one or more example embodiments of the present disclosure.

Referring to FIG. 1, the system 100 may include RF inputs 102 that may be received by a transceiver 104 (e.g., via one or multiple RF chains with hardware and/or logic for ADC, down-mixing, input buffering, etc.). The RF inputs 102 may be provided to a TX 106 of the transceiver 104 (e.g., including a transport layer and a link layer). The TX 106 may encode frames of the RF inputs 102 for transfer from SERDES TX lanes108 to SERDES RX lanes 112 of a radio interface 114 (e.g., with layer-1 and baseband functionality).

The frames transferred from the SERDES TX lanes 108 to the SERDES RX lanes 112 may borrow a bit to be used as a STS bit 110, every P frames (e.g., rather than every frame). For example, in the example frames 1-P shown in FIG. 1, the frames are JESD I/Q frames with N'=16 and F=4, but the bit borrowing concept for the STS bit 110 could apply to other types of frames. In particular, frame 1 includes a 16-bit I word (I₁₋₀ -I₁₋₁₅) and a 16-bit Q word (Q₁₋₀ - Q₁₋₁₅). Frame 2 includes a 16-bit I word (I₂₋₀ - I₂₋₁₅) and a 16-bit Q word (Q₂₋₀ - Q₂₋₁₅). Every P frames (e.g., frame P) may substitute one of the bits for the STS bit 110. For example, in frame P as shown in FIG. 1, the I_{P-0} frame may be replaced by the STS bit 110, so the resulting I word includes 15 bits (I_{P-1} - I_{P-15}) and the Q word includes 16 bits (Q_{P-0} - Q_{P-15}).

Still referring to FIG. 1, the SERDES RX lanes 112 may transfer the frames to a RX 116, which may include a link layer and a transport layer. The RX needs to know when the STS bit 110 has been included in the frames. The TX 106 may include new logic to insert the STS bit 110 into every Pth frame (e.g., for each respective RX chain, so P could be the same or different for respective RX chains). To perform this operation, a frame counter input may be provided to the TX 106 (e.g., to the new logic of the TX 106) to produce a strobe or pulse every Pth frame, which may enable the substitution of the STS bit 110 for the LSB of the I word in frame P. The TX 106 may be configured with a CS=0 indication that no control or status bits are sent in each word, so some frames may be sent with the full 16-bit per word resolution, and every Pth frame may substitute a LSB with the STS bit 110. The RX 116 may be configured with control input CS=0 indicating that no control or status bits need to be extracted from the LSBs of a data word. However, for every Pth frame, new logic of the RX 116 may extract the LSB of the I word (e.g,. the STS bit 110) and forward it for automatic gain control (AGC) processing. The RX 116 also may forward the extracted 16-bit words (e.g., frame 1, frame 2) for signal processing.

In one or more embodiments, for frame P and every Pth frame, where the LSB of the I word was substituted with the STS bit 110, a replacement I-word LSB may be inserted every Pth frame according to one of various procedures designed to minimize EVM impairment. For example, the transceiver 104 often rounds the RF inputs 102 from a higher precision to a lower precision prior to transmission. When a LSB is borrowed to insert the STS bit 110, there is a bit impact on the signal quality. For example, when rounding from 16 bits to 12 bits, borrowing a LSB has an impact of 1.5 bits on the signal quality because the proper rounding is lost along with the LSB. Rounding to 11 bits only when the STS bit 110 is inserted (e.g., every Pth frame instead of every frame), proper rounding may be maintained, and the ½ bit of performance may be recovered. To achieve this, the borrowed bit may be replaced by a zero after extraction on the radio interface 114 side.

In one or more embodiments, if the injected data bits (e.g., the STS bit 110) are not evenly distributed between 1s and 0s, then a DC offset will be introduced to the signal. For an NR waveform represented by the RF inputs 102, a DC offset is intolerable because there is a subcarrier allocated at DC. There are three ways to prevent this DC offset problem: (1) Use the adaptive rounding scheme proposed above. In this case, the proper rounding is maintained and the inserted bits are removed (zeroed-out). (2) Apply convergent/bankers rounding on the sample prior to insertion of the extra data bit in the LSB. On the Rx side (e.g., the radio interface 114 side), the extra data bit would need to be removed (zeroed-out). (3) On the Rx side, replace the extra data bit with a random pattern of 1s and 0s. This does not require any special rounding on the Tx side.

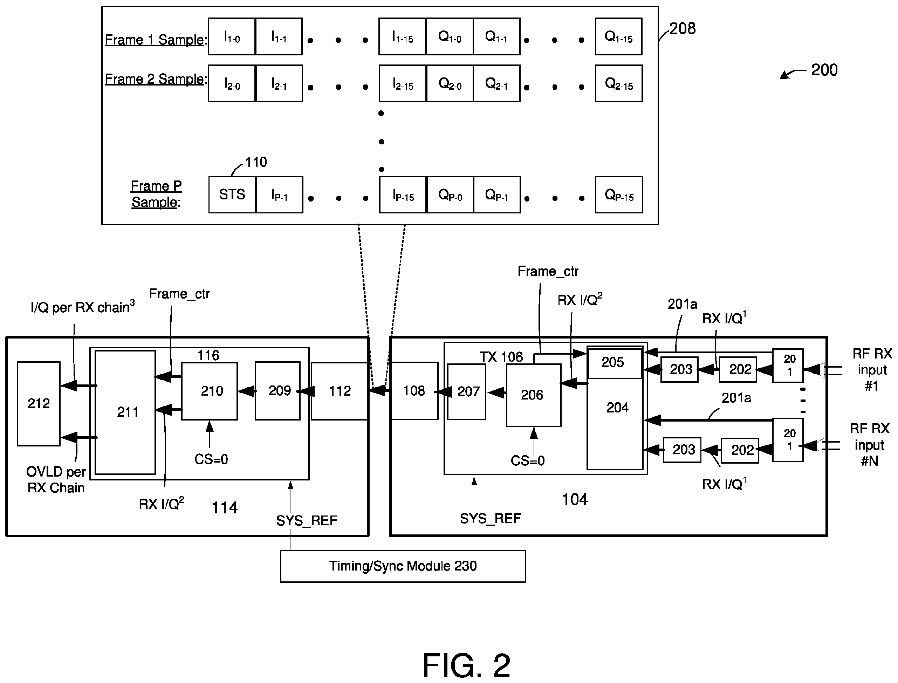

FIG. 2 illustrates an example JESD system 200 for bit borrowing for streaming data, in accordance with one or more example embodiments of the present disclosure.

Referring to FIG. 2, the JESD system 200 transfers the frames 1-P of FIG. 1 using the bit borrowing scheme of FIG. 1, and shows more detailed JESD architecture for facilitating the bit borrowing scheme. In particular, for RF RX inputs 1-N (e.g., with their own RX chains 1-N that may include downmixers 202 to produce RX I/Q¹, and input buffers 203), a RX_overload_indicator (OVLD_1-N) 201a may be input to the TX 106 (e.g., a JESD TX) to signal use of the overload bit (e.g., STS bit 110). New logic for the TX 106 may include I/Q data, overload bit collection, and bit borrowing logic 204, and a frame counter input 205. The I/Q data, overload bit collection, and bit borrowing logic 204 may insert the overload status bit OVLD (e.g., STS bit 110) every Pth frame (per RX chain). In order to perform this operation, the frame counter input 205 is needed to produce a strobe or pulse every Pth frame, which enables the substitution of the OVLD bit for the I-word LSB. A transport layer 206 of the TX 106 may receive the I/Q data with the OVLD status bit substituted every P frames. The transport layer 206 may be configured with CS=0 to indicate that no control or status bits are sent in each word. A link layer 207 of the TX 106 may perform line coding/scrambling, and FEC coding of the frames, and the frames may be transferred from the SERDES TX lanes 108 to the SERDES RX lanes 112 with the STS bit 110 being used every P frame samples (e.g., of frame samples 208) as shown.

Still referring to FIG. 2, the RX 116 may include a link layer 209 (e.g., for line decoding/descrambling and FEC decoding of the frames 1-P), a transport layer 210 (e.g., for frame parsing) that may be configured with CS=0 (e.g., indicating that no control or status bits need to be extracted from the data word LSBs), and new logic 211 for I/Q data and overload bit extraction, LSB replacement processing, and forwarding. At the new logic 211, for every Pth frame, the LSB of the I word (OVLD bit) is extracted and forwarded to block 212, so that AGC processing can be performed. The new logic 211 also may forward the extracted 16-bit I/Q words to 212 for signal processing. For the Pth frame, where the LSB of the I word was substituted with the OVLD bit, a replacement I-word LSB is inserted every Pth frame according to one of various procedures designed to minimize EVM impairment. A timing/sync module 230 may be used for frame synchronization between the TX 106 and the RX 116.

In one or more embodiments, the post-processing of the new logic 211 needs to know what frames on the TX side (e.g., the I/Q data, overload bit collection, and bit borrowing logic 204) had the OVLD bit substituted in the I word. While the periodicity parameter P can be configured in advance for both TX 106 and RX 116, the first frame in which OVLD bit substitution occurred must also be known. This frame synchronization is achieved using the JESD SYS_REF inputs fed to both JESD TX 106 and RX 116 on each system-on-a-chip (SOC). P may be selected such that there is a constant integer number of P-Frames in an JESD204D Alignment Block or JESD204C Extended Multiframe, as this is the boundary upon which data begins to flow in the JESD204 Tx 106 and Rx 116 paths. When frames are counted from the beginning of data flow, the Pth Frame in which to inject/extract the OVLD bit should be identifiable. Every Pth frame, a strobe or other control may be generated that enables the insertion of the status bit in the frame for the JESD TX stream (I/Q data, overload bit collection, and bit borrowing logic 204 and frame counter input 205). On the JESD RX 116 side, the synchronized frame counting scheme ensures that, when this Pth frame is received by the JESD transport layer 210, the OVLD bit will be extracted by new logic 211.

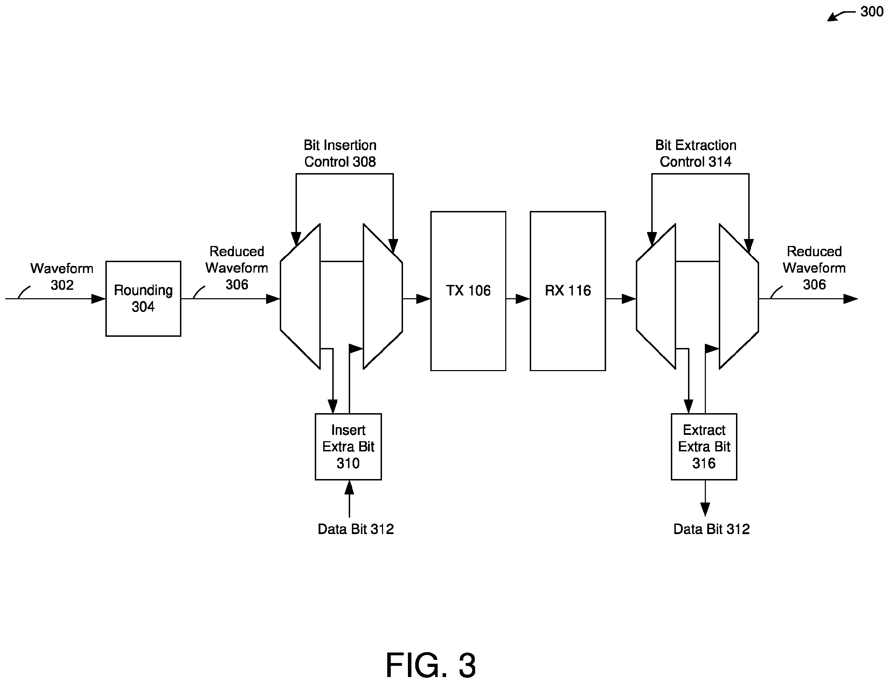

FIG. 3 illustrates an example architecture 300 for bit insertion and extraction for the bit borrowing of FIG. 1 and FIG. 2, in accordance with one or more example embodiments of the present disclosure.

Referring to FIG. 3, a waveform 302 (e.g., a 16-bit I/Q waveform) may be rounded 304 into a reduced waveform 306 (e.g., a 12-bit I/Q waveform), and a bit insertion control 308 may insert an extra bit 310 (e.g., data bit 312) into the waveform, which may be transferred from the TX 106 of FIG. 1 to the RX 116 of FIG. 1 (e.g., as described above with respect to FIG. 1 and FIG. 2 in the form of frames into which the STS bit 110 is inserted every P frames). On the RX 116 side, a bit extraction control 314 may extract the extra bit 316 (e.g., data bit 312), resulting in the reduced waveform 306.

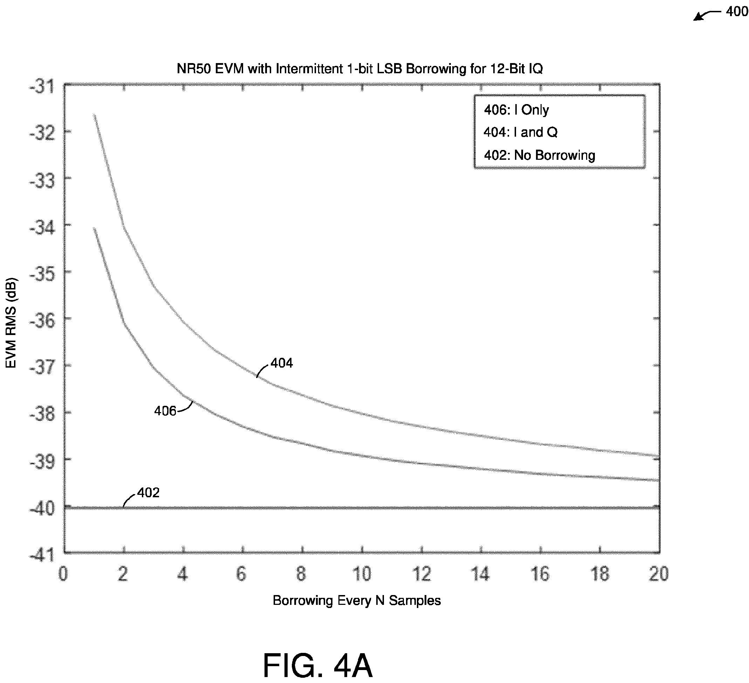

Using the setup shown in FIG. 3, a simulation was performed with a 12-bit IQ waveform being sent over JESD. The LSB bits were borrowed every N samples. In one case, the bits were borrowed from the real samples (I) only, and in the other case, bits were borrowed from both the real (I) and imaginary (Q) parts. The RMS signal level was set to be -36dBFS to represent a received wireless signal at a moderate strength level. The measured EVM and SQNR with different borrowing rates N are shown in FIGs. 4A-4C. If the bit is borrowed in every cycle (N=1), the degradation is 8.5dB for borrowing from both I and Q, and 6dB for borrowing from only I. When the bit is borrowed less often, this degradation is significantly reduced.

FIG. 4A is a graph 400 showing error vector magnitude (EVM) root mean squared (RMS) with an intermittent 1-bit least significant bit borrowing (e.g., for 12-bit IQ) using the architecture 300 of FIG. 3, in accordance with one or more example embodiments of the present disclosure.

Referring to FIG. 4A, the EVM RMS (dB) is shown when there is no borrowing 402, when bit borrowing occurs for I and Q words 404, and when bit borrowing occurs for I words only 406.

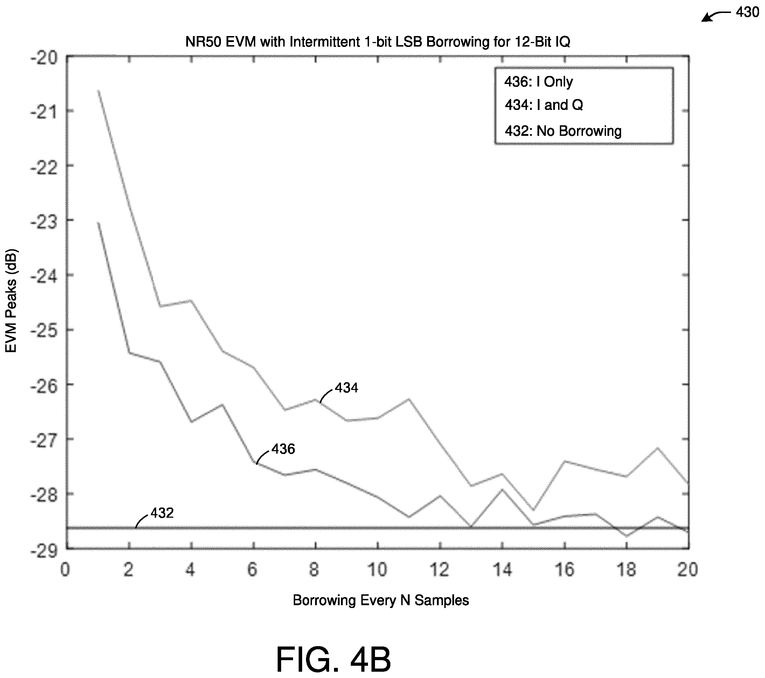

FIG. 4B is a graph 430 showing EVM peaks with an intermittent 1-bit least significant bit borrowing (e.g., for 12-bit IQ) using the architecture 300 of FIG. 3, in accordance with one or more example embodiments of the present disclosure.

Referring to FIG. 4B, the EVM peaks (dB) are shown when there is no borrowing 432, when bit borrowing occurs for I and Q words 434, and when bit borrowing occurs for I words only 436.

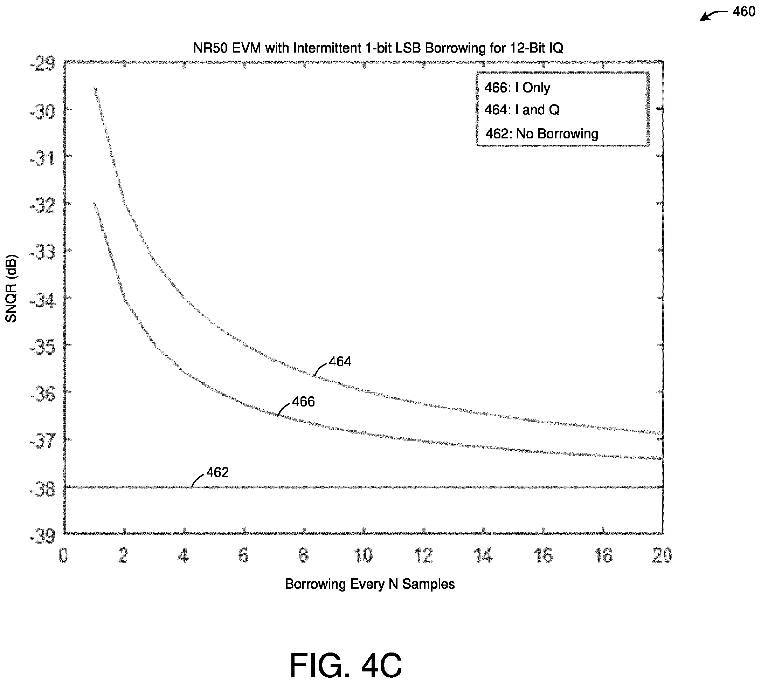

FIG. 4C is a graph 460 showing signal-to-quantization-noise ratio (SQNR) with an intermittent 1-bit least significant bit borrowing (e.g., for 12-bit IQ) using the architecture 300 of FIG. 3, in accordance with one or more example embodiments of the present disclosure.

Referring to FIG. 4C, the SNQR (dB) is shown when there is no borrowing 462, when bit borrowing occurs for I and Q words 464, and when bit borrowing occurs for I words only 466.

Referring to FIGs. 4A-4C, the N samples refer to the sampling interval at which bit borrowing occurs. It may or may not be equal to the periodicity parameter P described above, e.g., if there are two I/Q samples per frame, then N=2P. What FIGs. 4A-4C demonstrates is that when the bit is borrowed less often, the degradation is significantly reduced. For example, in FIG. 4A, with periodicity parameter P=16, the EVM floor is only raised by less than 1 dB. Therefore, it is beneficial to perform the bit borrowing less frequently (e.g., not every frame), so the enhanced bit borrowing herein reduces the degradation.

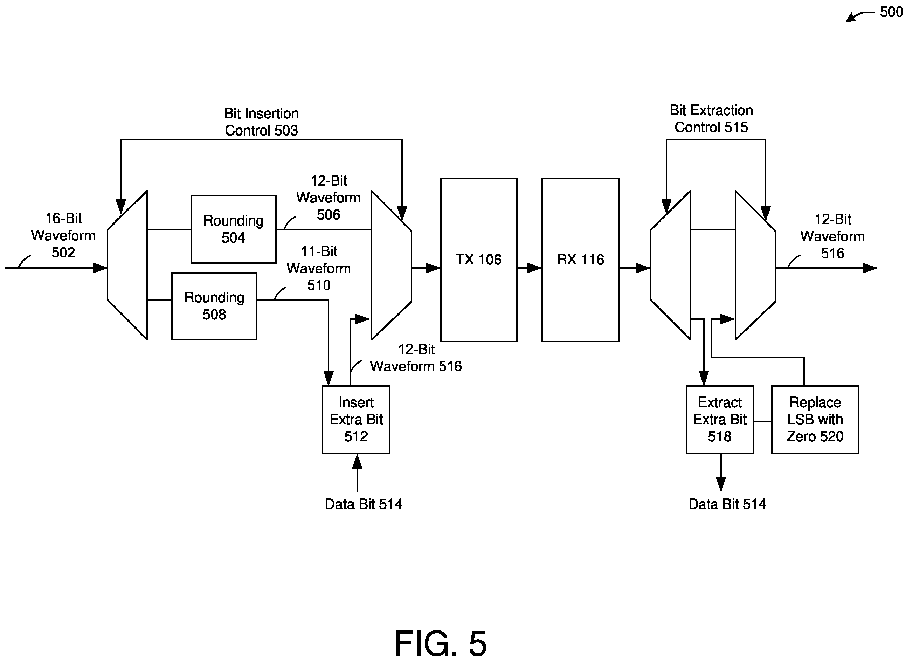

FIG. 5 illustrates an example architecture 500 for bit insertion and extraction for the bit borrowing of FIG. 1 and FIG. 2, in accordance with one or more example embodiments of the present disclosure.

Referring to FIG. 5, the example waveform 302 of FIG. 3 is shown as a 16-bit waveform 502 (for example purposes only). A bit insertion control 503 may include rounding 504 of the 16-bit waveform 502 to a 12-bit waveform 506, and rounding 508 of the 16-bit waveform 502 to an 11-bit waveform 510 into which an extra bit may be inserted 512 (e.g., data bit 514) to form a 12-bit waveform 516. The TX 106 of FIG. 1 may transfer the 12-bit waveform 516 (e.g., as in the frames 1-P in FIGs. 1 and 2) to the RX 116, and bit extraction control 515 may be applied to extract the extra bit 518 (e.g., data bit 514) and replace the LSB with zero 520, resulting in the 12-bit waveform 516.

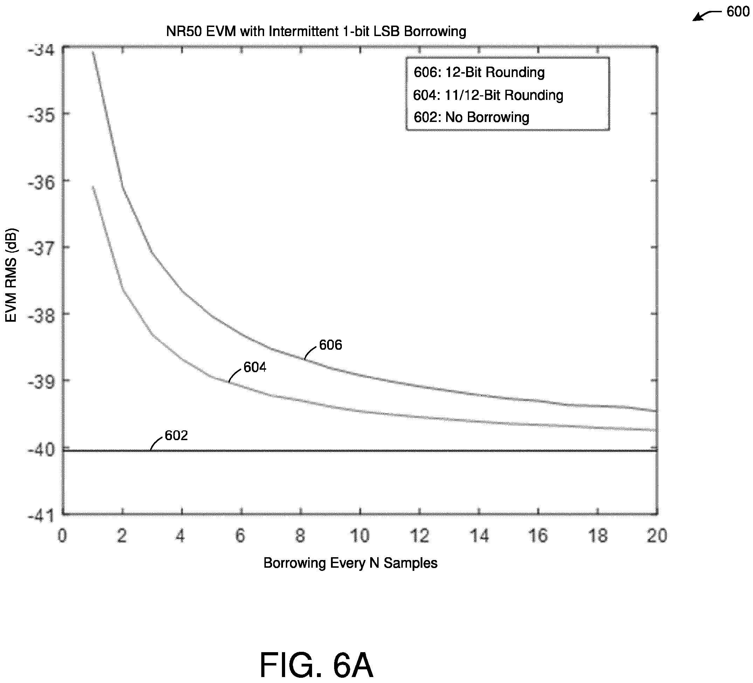

Often, in the downmixers 202 of FIG. 2, the data is rounded from a higher precision to a lower precision prior to transmission over JESD. Sample rates used may follow 3GPP standards (e.g., 122.88 MSPS for every 100 MHz of occupied bandwidth received, with one sample including I and Q words that may be mixed down to a complex baseband format). In the example of FIG. 5, the samples were rounded from 16-bits to 12-bits. When the LSB bit is borrowed, there is a 1.5 bit impact on the signal quality because the proper rounding is lost along with the LSB. However, if the 16-bit sample were rounded to 11-bits only when the extra bit is being inserted, then proper rounding could be maintained the ½ bit of performance could be recovered. It would require that this borrowed bit be replaced by a zero after extraction on the JESD Rx side. The performance improvement is shown in FIGs. 6A-6C for the case of borrowing one bit from the real (I) part only. This architecture would also prevent DC problems due to the injection.

FIG. 6A is a graph showing EVM RMS with an intermittent 1-bit least significant bit borrowing using the architecture 500 of FIG. 5, in accordance with one or more example embodiments of the present disclosure.

Referring to FIG. 6A, the EVM RMS (dB) is shown when there is no borrowing 602, when bit borrowing occurs for 11/12-bit rounding 604, and when bit borrowing occurs for 12-bit rounding only 606.

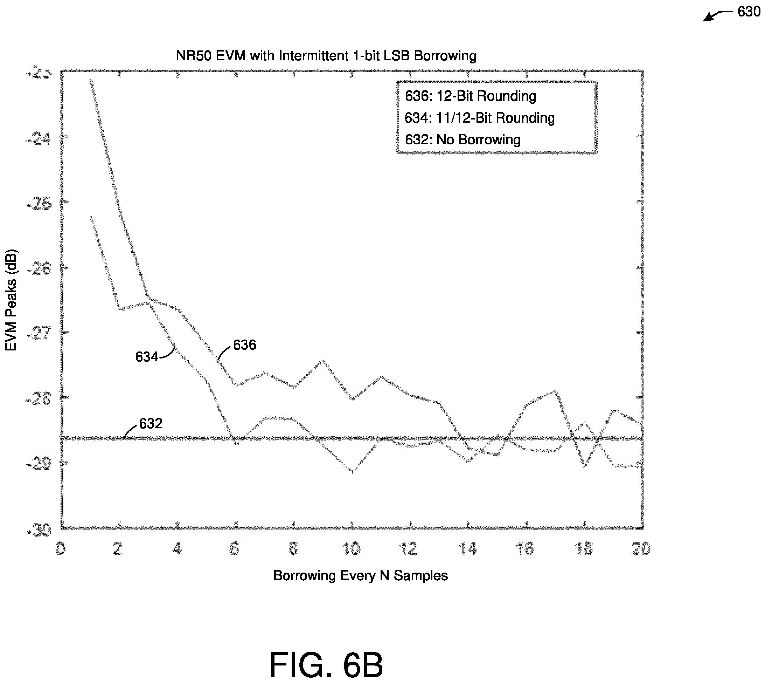

FIG. 6B is a graph showing EVM peaks with an intermittent 1-bit least significant bit borrowing using the architecture 500 of FIG. 5, in accordance with one or more example embodiments of the present disclosure.

Referring to FIG. 6B, the EVM peaks (dB) are shown when there is no borrowing 632, when bit borrowing occurs for 11/12-bit rounding 634, and when bit borrowing occurs for 12-bit rounding only 636.

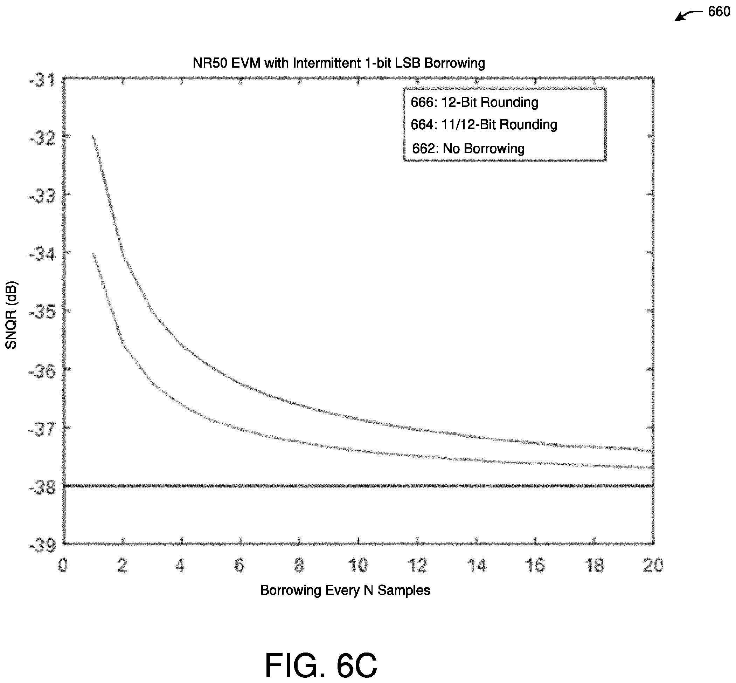

FIG. 6C is a graph showing SQNR with an intermittent 1-bit least significant bit borrowing using the architecture 500 of FIG. 5, in accordance with one or more example embodiments of the present disclosure.

Referring to FIG. 6C, the SNQR (dB) is shown when there is no borrowing 662, when bit borrowing occurs for 11/12-bit rounding 664, and when bit borrowing occurs for 12-bit rounding only 666.

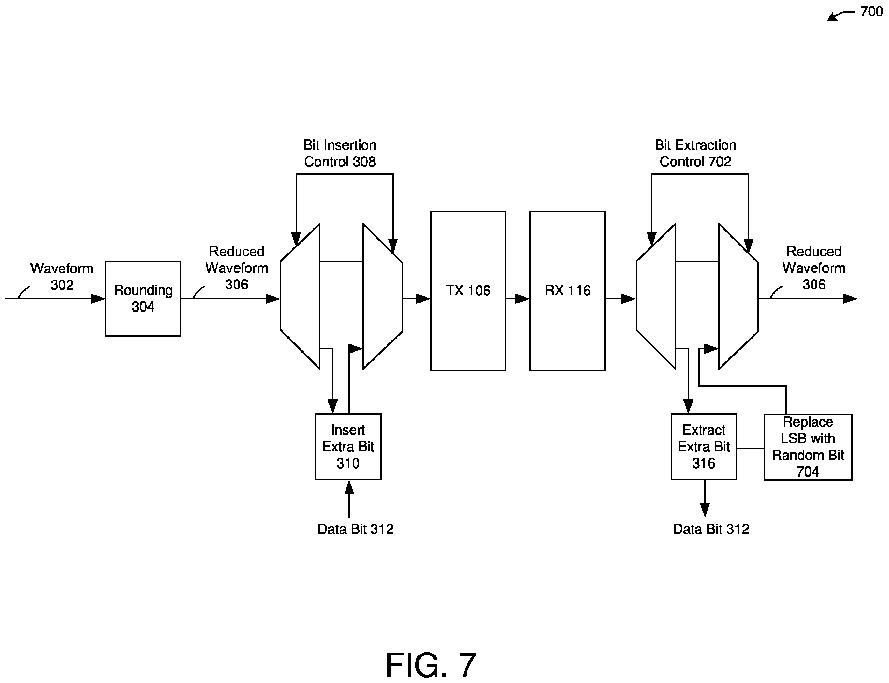

FIG. 7 illustrates an example architecture 700 for bit insertion and extraction for the bit borrowing of FIG. 1 and FIG. 2, in accordance with one or more example embodiments of the present disclosure.

Referring to FIG. 7, the architecture 700 is similar to the architecture 300 of FIG. 3, but bit extraction control 702 may include both the extract extra bit 316 and a step of replacing a LSB with a random bit 704.

If the injected data bits are not evenly distributed between 1s and 0s, then a DC offset will be introduced to the signal. For an NR waveform, a DC offset is intolerable because there is a subcarrier allocated at DC. There are three ways to prevent this DC offset problem:
(1) Use the adaptive rounding scheme proposed above. In this case, the proper rounding is maintained and the inserted bits are removed (zeroed-out).
(2) Apply convergent/bankers rounding on the sample prior to insertion of the extra data bit in the LSB. On the Rx side, the extra data bit would need to be removed (zeroed-out).
(3) On the Rx side, replace the extra data bit with a random pattern of 1s and 0s (e.g., replacing a LSB with a random bit 704). This does not require any special rounding on the Tx side.

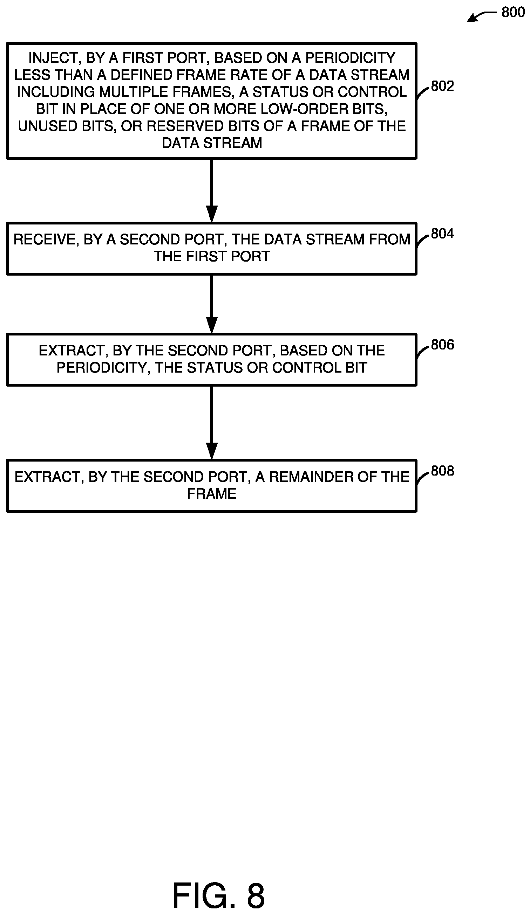

FIG. 8 illustrates a flow diagram of illustrative process 800 for bit borrowing for streaming data, in accordance with one or more example embodiments of the present disclosure.

At block 802, a device (e.g., the transceiver 104 of FIG. 1, the TX 106 of FIG. 1, the bit borrowing logic 204) may inject, as a first port, based on a periodicity (e.g., every P frames) less than a defined frame/word rate of a data stream including multiple frames/words, a status or control bit (e.g., the STS bit 110 of FIG. 1) in place of one or more low-order bits (e.g., LSBs), reserved bits, or unused bits of a Pth frame of the data stream.

At block 804, the device may provide the data stream, with any injected status or control bits, from a first port to a second port. The providing may use SERDES or other low-voltage differential interfaces, in some examples.

At block 806, the device may extract, using the second port, based on the periodicity (e.g., the second port may be synchronized to the periodicity to know when to extract a status or control bit), the status or control bit.

At block 808, the device may extract the remainder (e.g., remaining bits other than the status or control bit) of the frame.

It is understood that the above descriptions are for purposes of illustration and are not meant to be limiting.

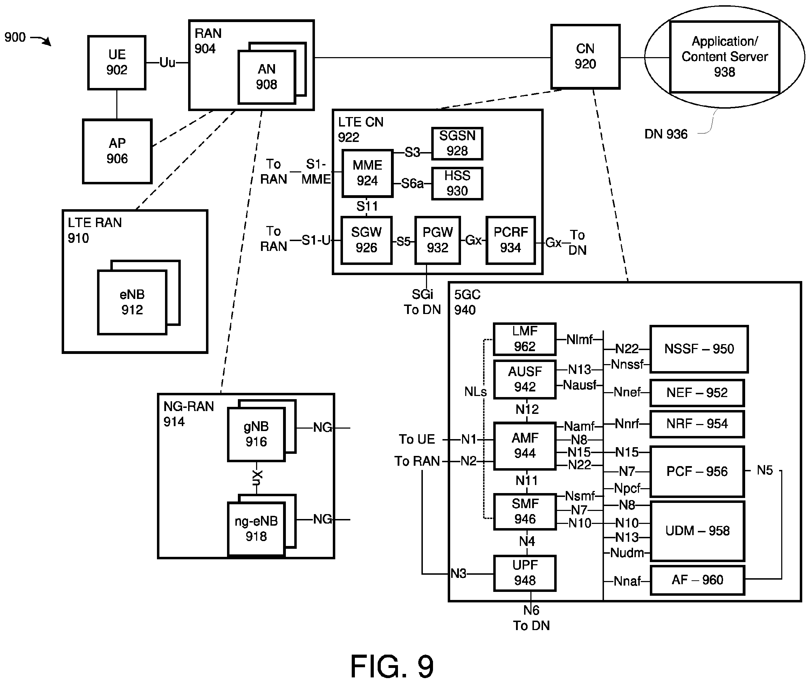

FIG. 9. illustrates a network 900, in accordance with one or more example embodiments of the present disclosure.

The network 900 may operate in a manner consistent with 3GPP technical specifications for LTE or 5G/NR systems. However, the example embodiments are not limited in this regard and the described embodiments may apply to other networks that benefit from the principles described herein, such as future 3GPP systems, or the like.

The network 900 may include a UE 902, which may include any mobile or non-mobile computing device designed to communicate with a RAN 904 via an over-the-air connection. The UE 902 may be communicatively coupled with the RAN 904 by a Uu interface. The UE 902 may be, but is not limited to, a smartphone, tablet computer, wearable computer device, desktop computer, laptop computer, in-vehicle infotainment, in-car entertainment device, instrument cluster, head-up display device, onboard diagnostic device, dashtop mobile equipment, mobile data terminal, electronic engine management system, electronic/engine control unit, electronic/engine control module, embedded system, sensor, microcontroller, control module, engine management system, networked appliance, machine-type communication device, M2M or D2D device, IoT device, etc.

In some embodiments, the network 900 may include a plurality of UEs coupled directly with one another via a sidelink interface. The UEs may be M2M/D2D devices that communicate using physical sidelink channels such as, but not limited to, PSBCH, PSDCH, PSSCH, PSCCH, PSFCH, etc.

In some embodiments, the UE 902 may additionally communicate with an AP 906 via an over-the-air connection. The AP 906 may manage a WLAN connection, which may serve to offload some/all network traffic from the RAN 904. The connection between the UE 902 and the AP 906 may be consistent with any IEEE 802.11 protocol, wherein the AP 906 could be a wireless fidelity (Wi-Fi^{®}) router. In some embodiments, the UE 902, RAN 904, and AP 906 may utilize cellular-WLAN aggregation (for example, LWA/LWIP). Cellular-WLAN aggregation may involve the UE 902 being configured by the RAN 904 to utilize both cellular radio resources and WLAN resources.

The RAN 904 may include one or more access nodes, for example, AN 908. AN 908 may terminate air-interface protocols for the UE 902 by providing access stratum protocols including RRC, PDCP, RLC, MAC, and L1 protocols. In this manner, the AN 908 may enable data/voice connectivity between CN 920 and the UE 902. In some embodiments, the AN 908 may be implemented in a discrete device or as one or more software entities running on server computers as part of, for example, a virtual network, which may be referred to as a CRAN or virtual baseband unit pool. The AN 908 be referred to as a BS, gNB, RAN node, eNB, ng-eNB, NodeB, RSU, TRxP, TRP, etc. The AN 908 may be a macrocell base station or a low power base station for providing femtocells, picocells or other like cells having smaller coverage areas, smaller user capacity, or higher bandwidth compared to macrocells.

In embodiments in which the RAN 904 includes a plurality of ANs, they may be coupled with one another via an X2 interface (if the RAN 904 is an LTE RAN) or an Xn interface (if the RAN 904 is a 5G RAN). The X2/Xn interfaces, which may be separated into control/user plane interfaces in some embodiments, may allow the ANs to communicate information related to handovers, data/context transfers, mobility, load management, interference coordination, etc.

The ANs of the RAN 904 may each manage one or more cells, cell groups, component carriers, etc. to provide the UE 902 with an air interface for network access. The UE 902 may be simultaneously connected with a plurality of cells provided by the same or different ANs of the RAN 904. For example, the UE 902 and RAN 904 may use carrier aggregation to allow the UE 902 to connect with a plurality of component carriers, each corresponding to a Pcell or Scell. In dual connectivity scenarios, a first AN may be a master node that provides an MCG and a second AN may be secondary node that provides an SCG. The first/second ANs may be any combination of eNB, gNB, ng-eNB, etc.

The RAN 904 may provide the air interface over a licensed spectrum or an unlicensed spectrum. To operate in the unlicensed spectrum, the nodes may use LAA, eLAA, and/or feLAA mechanisms based on CA technology with PCells/Scells. Prior to accessing the unlicensed spectrum, the nodes may perform medium/carrier-sensing operations based on, for example, a listen-before-talk (LBT) protocol.

In V2X scenarios the UE 902 or AN 908 may be or act as a RSU, which may refer to any transportation infrastructure entity used for V2X communications. An RSU may be implemented in or by a suitable AN or a stationary (or relatively stationary) UE. An RSU implemented in or by: a UE may be referred to as a "UE-type RSU"; an eNB may be referred to as an "eNB-type RSU"; a gNB may be referred to as a "gNB-type RSU"; and the like. In one example, an RSU is a computing device coupled with radio frequency circuitry located on a roadside that provides connectivity support to passing vehicle UEs. The RSU may also include internal data storage circuitry to store intersection map geometry, traffic statistics, media, as well as applications/software to sense and control ongoing vehicular and pedestrian traffic. The RSU may provide very low latency communications required for high speed events, such as crash avoidance, traffic warnings, and the like. Additionally or alternatively, the RSU may provide other cellular/WLAN communications services. The components of the RSU may be packaged in a weatherproof enclosure suitable for outdoor installation, and may include a network interface controller to provide a wired connection (e.g., Ethernet) to a traffic signal controller or a backhaul network.

In some embodiments, the RAN 904 may be an LTE RAN 910 with eNBs, for example, eNB 912. The LTE RAN 910 may provide an LTE air interface with the following characteristics: SCS of 15 kHz; CP-OFDM waveform for DL and SC-FDMA waveform for UL; turbo codes for data and TBCC for control; etc. The LTE air interface may rely on CSI-RS for CSI acquisition and beam management; PDSCH/PDCCH DMRS for PDSCH/PDCCH demodulation; and CRS for cell search and initial acquisition, channel quality measurements, and channel estimation for coherent demodulation/detection at the UE. The LTE air interface may operating on sub-6 GHz bands.

In some embodiments, the RAN 904 may be an NG-RAN 914 with gNBs, for example, gNB 916, or ng-eNBs, for example, ng-eNB 918. The gNB 916 may connect with 5G-enabled UEs using a 5G NR interface. The gNB 916 may connect with a 5G core through an NG interface, which may include an N2 interface or an N3 interface. The ng-eNB 918 may also connect with the 5G core through an NG interface, but may connect with a UE via an LTE air interface. The gNB 916 and the ng-eNB 918 may connect with each other over an Xn interface.

In some embodiments, the NG interface may be split into two parts, an NG user plane (NG-U) interface, which carries traffic data between the nodes of the NG-RAN 914 and a UPF 948 (e.g., N3 interface), and an NG control plane (NG-C) interface, which is a signaling interface between the nodes of the NG-RAN 914 and an AMF 944 (e.g., N2 interface).

The NG-RAN 914 may provide a 5G-NR air interface with the following characteristics: variable SCS; CP-OFDM for DL, CP-OFDM and DFT-s-OFDM for UL; polar, repetition, simplex, and Reed-Muller codes for control and LDPC for data. The 5G-NR air interface may rely on CSI-RS, PDSCH/PDCCH DMRS similar to the LTE air interface. The 5G-NR air interface may not use a CRS, but may use PBCH DMRS for PBCH demodulation; PTRS for phase tracking for PDSCH; and tracking reference signal for time tracking. The 5G-NR air interface may operating on FR1 bands that include sub-6 GHz bands or FR2 bands that include bands from 24.25 GHz to 52.6 GHz. The 5G-NR air interface may include an SSB that is an area of a downlink resource grid that includes PSS/SSS/PBCH.

In some embodiments, the 5G-NR air interface may utilize BWPs for various purposes. For example, BWP can be used for dynamic adaptation of the SCS. For example, the UE 902 can be configured with multiple BWPs where each BWP configuration has a different SCS. When a BWP change is indicated to the UE 902, the SCS of the transmission is changed as well. Another use case example of BWP is related to power saving. In particular, multiple BWPs can be configured for the UE 902 with different amount of frequency resources (for example, PRBs) to support data transmission under different traffic loading scenarios. A BWP containing a smaller number of PRBs can be used for data transmission with small traffic load while allowing power saving at the UE 902 and in some cases at the gNB 916. A BWP containing a larger number of PRBs can be used for scenarios with higher traffic load.

The RAN 904 is communicatively coupled to CN 920 that includes network elements to provide various functions to support data and telecommunications services to customers/subscribers (for example, users of UE 902). The components of the CN 920 may be implemented in one physical node or separate physical nodes. In some embodiments, NFV may be utilized to virtualize any or all of the functions provided by the network elements of the CN 920 onto physical compute/storage resources in servers, switches, etc. A logical instantiation of the CN 920 may be referred to as a network slice, and a logical instantiation of a portion of the CN 920 may be referred to as a network sub-slice.

In some embodiments, the CN 920 may be an LTE CN 922, which may also be referred to as an EPC. The LTE CN 922 may include MME 924, SGW 926, SGSN 928, HSS 930, PGW 932, and PCRF 934 coupled with one another over interfaces (or "reference points") as shown. Functions of the elements of the LTE CN 922 may be briefly introduced as follows.

The MME 924 may implement mobility management functions to track a current location of the UE 902 to facilitate paging, bearer activation/deactivation, handovers, gateway selection, authentication, etc.

The SGW 926 may terminate an S1 interface toward the RAN and route data packets between the RAN and the LTE CN 922. The SGW 926 may be a local mobility anchor point for inter-RAN node handovers and also may provide an anchor for inter-3GPP mobility. Other responsibilities may include lawful intercept, charging, and some policy enforcement.

The SGSN 928 may track a location of the UE 902 and perform security functions and access control. In addition, the SGSN 928 may perform inter-EPC node signaling for mobility between different RAT networks; PDN and S-GW selection as specified by MME 924; MME selection for handovers; etc. The S3 reference point between the MME 924 and the SGSN 928 may enable user and bearer information exchange for inter-3GPP access network mobility in idle/active states.

The HSS 930 may include a database for network users, including subscription-related information to support the network entities' handling of communication sessions. The HSS 930 can provide support for routing/roaming, authentication, authorization, naming/addressing resolution, location dependencies, etc. An S6a reference point between the HSS 930 and the MME 924 may enable transfer of subscription and authentication data for authenticating/authorizing user access to the LTE CN 920.

The PGW 932 may terminate an SGi interface toward a data network (DN) 936 that may include an application/content server 938. The PGW 932 may route data packets between the LTE CN 922 and the data network 936. The PGW 932 may be coupled with the SGW 926 by an S5 reference point to facilitate user plane tunneling and tunnel management. The PGW 932 may further include a node for policy enforcement and charging data collection (for example, PCEF). Additionally, the SGi reference point between the PGW 932 and the data network 936 may be an operator external public, a private PDN, or an intra-operator packet data network, for example, for provision of IMS services. The PGW 932 may be coupled with a PCRF 934 via a Gx reference point.

The PCRF 934 is the policy and charging control element of the LTE CN 922. The PCRF 934 may be communicatively coupled to the app/content server 938 to determine appropriate QoS and charging parameters for service flows. The PCRF 932 may provision associated rules into a PCEF (via Gx reference point) with appropriate TFT and QCI.

In some embodiments, the CN 920 may be a 5GC 940. The 5GC 940 may include an AUSF 942, AMF 944, SMF 946, UPF 948, NSSF 950, NEF 952, NRF 954, PCF 956, UDM 958, and AF 960 coupled with one another over interfaces (or "reference points") as shown. Functions of the elements of the 5GC 940 may be briefly introduced as follows.

The AUSF 942 may store data for authentication of UE 902 and handle authentication-related functionality. The AUSF 942 may facilitate a common authentication framework for various access types. In addition to communicating with other elements of the 5GC 940 over reference points as shown, the AUSF 942 may exhibit an Nausf service-based interface.

The AMF 944 may allow other functions of the 5GC 940 to communicate with the UE 902 and the RAN 904 and to subscribe to notifications about mobility events with respect to the UE 902. The AMF 944 may be responsible for registration management (for example, for registering UE 902), connection management, reachability management, mobility management, lawful interception of AMF-related events, and access authentication and authorization. The AMF 944 may provide transport for SM messages between the UE 902 and the SMF 946, and act as a transparent proxy for routing SM messages. AMF 944 may also provide transport for SMS messages between UE 902 and an SMSF. AMF 944 may interact with the AUSF 942 and the UE 902 to perform various security anchor and context management functions. Furthermore, AMF 944 may be a termination point of a RAN CP interface, which may include or be an N2 reference point between the RAN 904 and the AMF 944; and the AMF 944 may be a termination point of NAS (N1) signaling, and perform NAS ciphering and integrity protection. AMF 944 may also support NAS signaling with the UE 902 over an N3 IWF interface.

The SMF 946 may be responsible for SM (for example, session establishment, tunnel management between UPF 948 and AN 908); UE IP address allocation and management (including optional authorization); selection and control of UP function; configuring traffic steering at UPF 948 to route traffic to proper destination; termination of interfaces toward policy control functions; controlling part of policy enforcement, charging, and QoS; lawful intercept (for SM events and interface to LI system); termination of SM parts of NAS messages; downlink data notification; initiating AN specific SM information, sent via AMF 944 over N2 to AN 908; and determining SSC mode of a session. SM may refer to management of a PDU session, and a PDU session or "session" may refer to a PDU connectivity service that provides or enables the exchange of PDUs between the UE 902 and the data network 936.

The UPF 948 may act as an anchor point for intra-RAT and inter-RAT mobility, an external PDU session point of interconnect to data network 936, and a branching point to support multi-homed PDU session. The UPF 948 may also perform packet routing and forwarding, perform packet inspection, enforce the user plane part of policy rules, lawfully intercept packets (UP collection), perform traffic usage reporting, perform QoS handling for a user plane (e.g., packet filtering, gating, UL/DL rate enforcement), perform uplink traffic verification (e.g., SDF-to-QoS flow mapping), transport level packet marking in the uplink and downlink, and perform downlink packet buffering and downlink data notification triggering. UPF 948 may include an uplink classifier to support routing traffic flows to a data network.

The NSSF 950 may select a set of network slice instances serving the UE 902. The NSSF 950 may also determine allowed NSSAI and the mapping to the subscribed S-NSSAIs, if needed. The NSSF 950 may also determine the AMF set to be used to serve the UE 902, or a list of candidate AMFs based on a suitable configuration and possibly by querying the NRF 954. The selection of a set of network slice instances for the UE 902 may be triggered by the AMF 944 with which the UE 902 is registered by interacting with the NSSF 950, which may lead to a change of AMF. The NSSF 950 may interact with the AMF 944 via an N22 reference point; and may communicate with another NSSF in a visited network via an N31 reference point (not shown). Additionally, the NSSF 950 may exhibit an Nnssf service-based interface.

The NEF 952 may securely expose services and capabilities provided by 3GPP network functions for third party, internal exposure/re-exposure, AFs (e.g., AF 960), edge computing or fog computing systems, etc. In such embodiments, the NEF 952 may authenticate, authorize, or throttle the AFs. NEF 952 may also translate information exchanged with the AF 960 and information exchanged with internal network functions. For example, the NEF 952 may translate between an AF-Service-Identifier and an internal 5GC information. NEF 952 may also receive information from other NFs based on exposed capabilities of other NFs. This information may be stored at the NEF 952 as structured data, or at a data storage NF using standardized interfaces. The stored information can then be re-exposed by the NEF 952 to other NFs and AFs, or used for other purposes such as analytics. Additionally, the NEF 952 may exhibit an Nnef service-based interface.

The NRF 954 may support service discovery functions, receive NF discovery requests from NF instances, and provide the information of the discovered NF instances to the NF instances. NRF 954 also maintains information of available NF instances and their supported services. As used herein, the terms "instantiate," "instantiation," and the like may refer to the creation of an instance, and an "instance" may refer to a concrete occurrence of an object, which may occur, for example, during execution of program code. Additionally, the NRF 954 may exhibit the Nnrf service-based interface.

The PCF 956 may provide policy rules to control plane functions to enforce them, and may also support unified policy framework to govern network behavior. The PCF 956 may also implement a front end to access subscription information relevant for policy decisions in a UDR of the UDM 958. In addition to communicating with functions over reference points as shown, the PCF 956 exhibit an Npcf service-based interface.

The UDM 958 may handle subscription-related information to support the network entities' handling of communication sessions, and may store subscription data of UE 902. For example, subscription data may be communicated via an N8 reference point between the UDM 958 and the AMF 944. The UDM 958 may include two parts, an application front end and a UDR. The UDR may store subscription data and policy data for the UDM 958 and the PCF 956, and/or structured data for exposure and application data (including PFDs for application detection, application request information for multiple UEs 902) for the NEF 952. The Nudr service-based interface may be exhibited by the UDR to allow the UDM 958, PCF 956, and NEF 952 to access a particular set of the stored data, as well as to read, update (e.g., add, modify), delete, and subscribe to notification of relevant data changes in the UDR. The UDM may include a UDM-FE, which is in charge of processing credentials, location management, subscription management and so on. Several different front ends may serve the same user in different transactions. The UDM-FE accesses subscription information stored in the UDR and performs authentication credential processing, user identification handling, access authorization, registration/mobility management, and subscription management. In addition to communicating with other NFs over reference points as shown, the UDM 958 may exhibit the Nudm service-based interface.

The AF 960 may provide application influence on traffic routing, provide access to NEF, and interact with the policy framework for policy control.

In some embodiments, the 5GC 940 may enable edge computing by selecting operator/3rd party services to be geographically close to a point that the UE 902 is attached to the network. This may reduce latency and load on the network. To provide edge-computing implementations, the 5GC 940 may select a UPF 948 close to the UE 902 and execute traffic steering from the UPF 948 to data network 936 via the N6 interface. This may be based on the UE subscription data, UE location, and information provided by the AF 960. In this way, the AF 960 may influence UPF (re)selection and traffic routing. Based on operator deployment, when AF 960 is considered to be a trusted entity, the network operator may permit AF 960 to interact directly with relevant NFs. Additionally, the AF 960 may exhibit an Naf service-based interface.

The data network 936 may represent various network operator services, Internet access, or third party services that may be provided by one or more servers including, for example, application/content server 938.

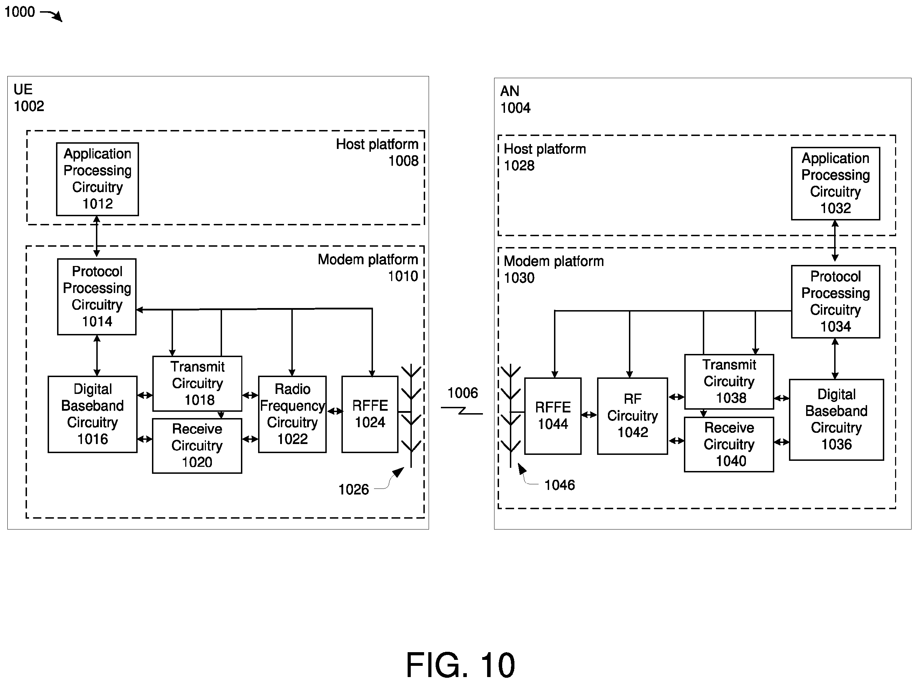

FIG. 10 schematically illustrates a wireless network, in accordance with one or more example embodiments of the present disclosure.

FIG. 10 schematically illustrates a wireless network 1000 in accordance with various embodiments. The wireless network 1000 may include a UE 1002 in wireless communication with an AN 1004. The UE 1002 and AN 1004 may be similar to, and substantially interchangeable with, like-named components described elsewhere herein.

The UE 1002 may be communicatively coupled with the AN 1004 via connection 1006. The connection 1006 is illustrated as an air interface to enable communicative coupling, and can be consistent with cellular communications protocols such as an LTE protocol or a 5G NR protocol operating at mmWave or sub-6GHz frequencies.

The UE 1002 may include a host platform 1008 coupled with a modem platform 1010. The host platform 1008 may include application processing circuitry 1012, which may be coupled with protocol processing circuitry 1014 of the modem platform 1010. The application processing circuitry 1012 may run various applications for the UE 1002 that source/sink application data. The application processing circuitry 1012 may further implement one or more layer operations to transmit/receive application data to/from a data network. These layer operations may include transport (for example UDP) and Internet (for example, IP) operations

The protocol processing circuitry 1014 may implement one or more of layer operations to facilitate transmission or reception of data over the connection 1006. The layer operations implemented by the protocol processing circuitry 1014 may include, for example, MAC, RLC, PDCP, RRC and NAS operations.

The modem platform 1010 may further include digital baseband circuitry 1016 that may implement one or more layer operations that are "below" layer operations performed by the protocol processing circuitry 1014 in a network protocol stack. These operations may include, for example, PHY operations including one or more of HARQ-ACK functions, scrambling/descrambling, encoding/decoding, layer mapping/de-mapping, modulation symbol mapping, received symbol/bit metric determination, multi-antenna port precoding/decoding, which may include one or more of space-time, space-frequency or spatial coding, reference signal generation/detection, preamble sequence generation and/or decoding, synchronization sequence generation/detection, control channel signal blind decoding, and other related functions.

The modem platform 1010 may further include transmit circuitry 1018, receive circuitry 1020, RF circuitry 1022, and RF front end (RFFE) 1024, which may include or connect to one or more antenna panels 1026. Briefly, the transmit circuitry 1018 may include a digital-to-analog converter, mixer, intermediate frequency (IF) components, etc.; the receive circuitry 1020 may include an analog-to-digital converter, mixer, IF components, etc.; the RF circuitry 1022 may include a low-noise amplifier, a power amplifier, power tracking components, etc.; RFFE 1024 may include filters (for example, surface/bulk acoustic wave filters), switches, antenna tuners, beamforming components (for example, phase-array antenna components), etc. The selection and arrangement of the components of the transmit circuitry 1018, receive circuitry 1020, RF circuitry 1022, RFFE 1024, and antenna panels 1026 (referred generically as "transmit/receive components") may be specific to details of a specific implementation such as, for example, whether communication is TDM or FDM, in mmWave or sub-6 gHz frequencies, etc. In some embodiments, the transmit/receive components may be arranged in multiple parallel transmit/receive chains, may be disposed in the same or different chips/modules, etc.

In some embodiments, the protocol processing circuitry 1014 may include one or more instances of control circuitry (not shown) to provide control functions for the transmit/receive components.

A UE reception may be established by and via the antenna panels 1026, RFFE 1024, RF circuitry 1022, receive circuitry 1020, digital baseband circuitry 1016, and protocol processing circuitry 1014. In some embodiments, the antenna panels 1026 may receive a transmission from the AN 1004 by receive-beamforming signals received by a plurality of antennas/antenna elements of the one or more antenna panels 1026.

A UE transmission may be established by and via the protocol processing circuitry 1014, digital baseband circuitry 1016, transmit circuitry 1018, RF circuitry 1022, RFFE 1024, and antenna panels 1026. In some embodiments, the transmit components of the UE 1004 may apply a spatial filter to the data to be transmitted to form a transmit beam emitted by the antenna elements of the antenna panels 1026.

Similar to the UE 1002, the AN 1004 may include a host platform 1028 coupled with a modem platform 1030. The host platform 1028 may include application processing circuitry 1032 coupled with protocol processing circuitry 1034 of the modem platform 1030. The modem platform may further include digital baseband circuitry 1036, transmit circuitry 1038, receive circuitry 1040, RF circuitry 1042, RFFE circuitry 1044, and antenna panels 1046. The components of the AN 1004 may be similar to and substantially interchangeable with like-named components of the UE 1002. In addition to performing data transmission/reception as described above, the components of the AN 1008 may perform various logical functions that include, for example, RNC functions such as radio bearer management, uplink and downlink dynamic radio resource management, and data packet scheduling.

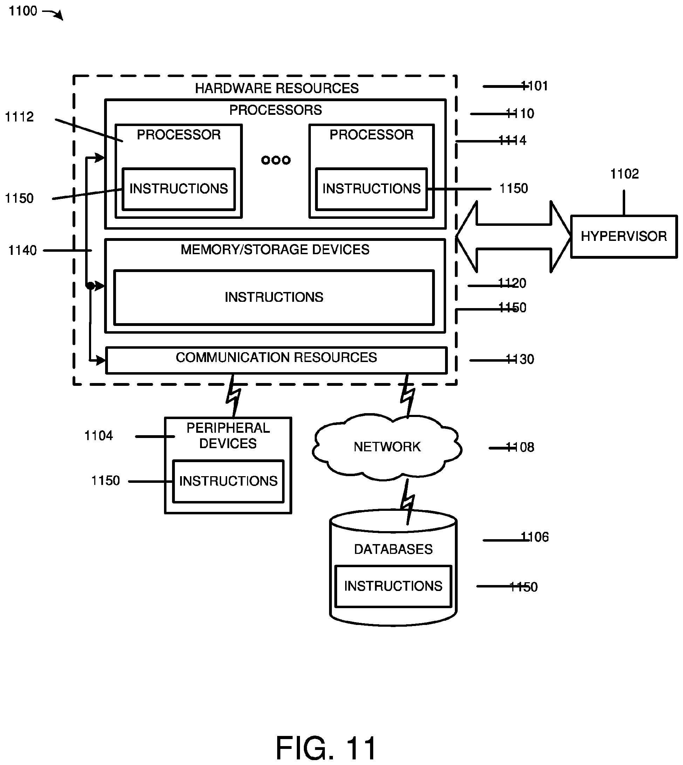

FIG. 11 is a block diagram illustrating components, in accordance with one or more example embodiments of the present disclosure.

FIG. 11 is a block diagram illustrating components, according to some example embodiments, able to read instructions from a machine-readable or computer-readable medium (e.g., a non-transitory machine-readable storage medium) and perform any one or more of the methodologies discussed herein. Specifically, FIG. 11 shows a diagrammatic representation of hardware resources 1100 including one or more processors (or processor cores) 1110, one or more memory/storage devices 1120, and one or more communication resources 1130, each of which may be communicatively coupled via a bus 1140 or other interface circuitry. For embodiments where node virtualization (e.g., NFV) is utilized, a hypervisor 1102 may be executed to provide an execution environment for one or more network slices/sub-slices to utilize the hardware resources 1100.

The processors 1110 may include, for example, a processor 1112 and a processor 1114. The processors 1110 may be, for example, a central processing unit (CPU), a reduced instruction set computing (RISC) processor, a complex instruction set computing (CISC) processor, a graphics processing unit (GPU), a DSP such as a baseband processor, an ASIC, an FPGA, a radio-frequency integrated circuit (RFIC), another processor (including those discussed herein), or any suitable combination thereof.

The memory/storage devices 1120 may include main memory, disk storage, or any suitable combination thereof. The memory/storage devices 1120 may include, but are not limited to, any type of volatile, non-volatile, or semi-volatile memory such as dynamic random access memory (DRAM), static random access memory (SRAM), erasable programmable read-only memory (EPROM), electrically erasable programmable read-only memory (EEPROM), Flash memory, solid-state storage, etc.

The communication resources 1130 may include interconnection or network interface controllers, components, or other suitable devices to communicate with one or more peripheral devices 1104 or one or more databases 1106 or other network elements via a network 1108. For example, the communication resources 1130 may include wired communication components (e.g., for coupling via USB, Ethernet, etc.), cellular communication components, NFC components, Bluetooth^{®} (or Bluetooth^{®} Low Energy) components, Wi-Fi^{®} components, and other communication components.

Instructions 1150 may comprise software, a program, an application, an applet, an app, or other executable code for causing at least any of the processors 1110 to perform any one or more of the methodologies discussed herein. The instructions 1150 may reside, completely or partially, within at least one of the processors 1110 (e.g., within the processor's cache memory), the memory/storage devices 1120, or any suitable combination thereof. Furthermore, any portion of the instructions 1150 may be transferred to the hardware resources 1100 from any combination of the peripheral devices 1104 or the databases 1106. Accordingly, the memory of processors 610, the memory/storage devices 1120, the peripheral devices 1104, and the databases 1106 are examples of computer-readable and machine-readable media.

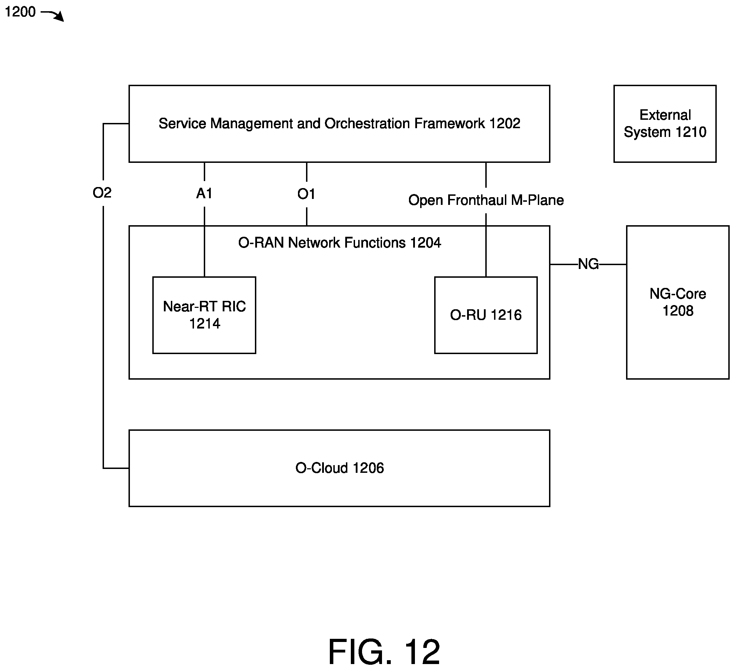

FIG. 12 is a block diagram of an example Open-RAN (O-RAN) architecture 1200, in accordance with one or more example embodiments of the present disclosure.

The 0-RAN architecture 1200 includes four O-RAN defined interfaces - namely, the Al interface, the 01 interface, the 02 interface, and the Open Fronthaul Management (M)-plane interface - which connect the Service Management and Orchestration (SMO) framework 1202 to 0-RAN network functions (NFs) 1204 and the O-Cloud 1206. The SMO 1202 also connects with an external system 1210, which provides enrichment data to the SMO 1202. Fig. 4 also illustrates that the Al interface terminates at an O-RAN Non-Real Time (RT) RAN Intelligent Controller (RIC) 1212 in or at the SMO 1202 and at the 0-RAN Near-RT RIC 1214 in or at the O-RAN NFs 1204. The O-RAN NFs 1204 can be VNFs such as VMs or containers, sitting above the O-Cloud 1206 and/or Physical Network Functions (PNFs) utilizing customized hardware. All 0-RAN NFs 1204 are expected to support the 01 interface when interfacing the SMO framework 1202. The O-RAN NFs 1204 connect to the NG-Core 1208 via the NG interface (which is a 3GPP defined interface). The Open Fronthaul M-plane interface between the SMO 1202 and the O-RAN Radio Unit (0-RU) 1216 supports the O- RU 1216 management in the O-RAN hybrid model. The Open Fronthaul M-plane interface is an optional interface to the SMO 1202 that is included for backward compatibility purposes, and is intended for management of the O-RU 1216 in hybrid mode only. The O-RU 1216 termination of the 01 interface towards the SMO 1202.

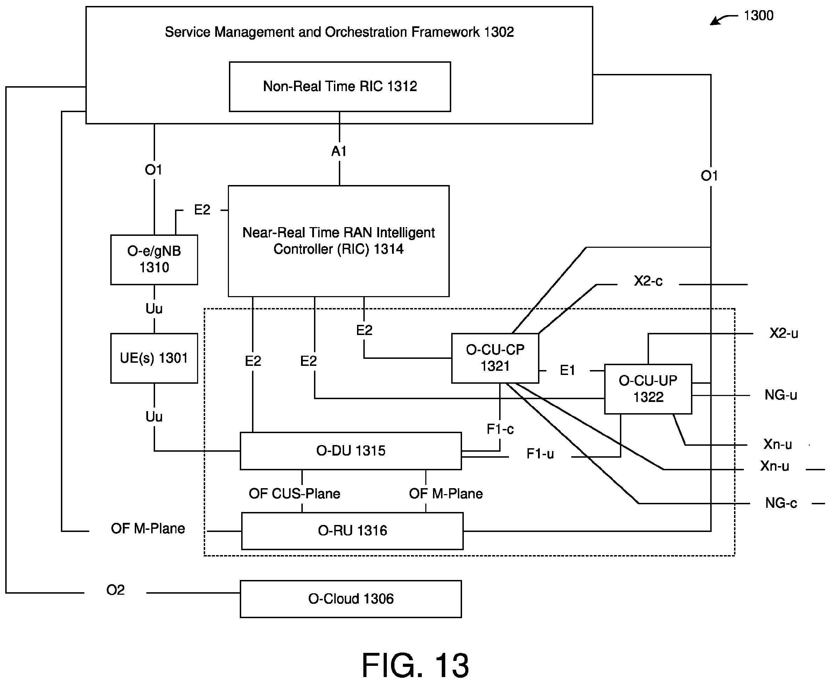

FIG. 13 is an example O-RAN logical architecture corresponding to the O-RAN architecture 1200 of FIG. 12, in accordance with one or more example embodiments of the present disclosure.

In FIG. 13, the SMO 1302 corresponds to the SMO 402, O-Cloud 1306 corresponds to the O-Cloud 1206, the non-RT RIC 1312 corresponds to the non-RT RIC 1212, the near-RT RIC 1314 corresponds to the near-RT RIC 1214, and the O-RU 1316 corresponds to the O-RU 1216 of FIG. 12, respectively. The O-RAN logical architecture 1200 includes a radio portion and a management portion.

The management portion/side of the architectures 1300 includes the SMO Framework 1302 containing the non-RT RIC 1312, and may include the O-Cloud 1306. The O-Cloud 1306 is a cloud computing platform including a collection of physical infrastructure nodes to host the relevant O-RAN functions (e.g., the near-RT RIC 1314, O-CU-CP 1321, O-CU-UP 1322, and the O-DU 1315), supporting software components (e.g., OSs, VMMs, container runtime engines, ML engines, etc.), and appropriate management and orchestration functions.

The radio portion/side of the logical architecture 1300 includes the near-RT RIC 1314, the O-RAN Distributed Unit (O-DU) 1315, the O-RU 1316, the O-RAN Central Unit - Control Plane (O-CU-CP) 1321, and the O-RAN Central Unit - User Plane (O-CU-UP) 1322 functions. The radio portion/side of the logical architecture 1300 may also include the O-e/gNB 1310.

The O-DU 1315 is a logical node hosting RLC, MAC, and higher PHY layer entities/elements (High-PHY layers) based on a lower layer functional split. The O-RU 1316 is a logical node hosting lower PHY layer entities/elements (Low-PHY layer) (e.g., FFT/iFFT, PRACH extraction, etc.) and RF processing elements based on a lower layer functional split. Virtualization of O-RU 1316 is FFS. The O-CU-CP 1321 is a logical node hosting the RRC and the control plane (CP) part of the PDCP protocol. The O O-CU-UP 1322 is a logical node hosting the user plane part of the PDCP protocol and the SDAP protocol.

An E2 interface terminates at a plurality of E2 nodes. The E2 nodes are logical nodes/entities that terminate the E2 interface. ForNR/5G access, the E2 nodes include the O-CU-CP 1321, O-CU-UP 1322, 0-DU 1315, or any combination of elements. For E-UTRA access the E2 nodes include the O-e/gNB 1310. As shown in FIG. 13, the E2 interface also connects the O-e/gNB 1310 to the Near-RT RIC 1314. The protocols over E2 interface are based exclusively on Control Plane (CP) protocols. The E2 functions are grouped into the following categories: (a) near-RT RIC 1314 services (REPORT, INSERT, CONTROL and POLICY; and (b) near-RT RIC 1314 support functions, which include E2 Interface Management (E2 Setup, E2 Reset, Reporting of General Error Situations, etc.) and Near-RT RIC Service Update (e g., capability exchange related to the list of E2 Node functions exposed over E2).

FIG. 13 shows the Uu interface between a UE 1301 and O-e/gNB 1310 as well as between the UE 1301 and O-RAN components. The Uu interface is a 3GPP defined interface, which includes a complete protocol stack from LI to L3 and terminates in the NG-RAN or E-UTRAN. The O-e/gNB 1310 is an LTE eNB, a 5G gNB or ng-eNB that supports the E2 interface. The O- e/gNB 1310 may be the same or similar as some other gNB or base station discussed previously. The a UE 1301 may correspond to a UE such as previously described with respect to one or more of the above embodiments or Figs., and/or the like. There may be multiple UEs 1301 and/or multiple O-e/gNB 1310, each of which may be connected to one another the via respective Uu interfaces. Although not shown in FIG. 13, the O-e/gNB 1310 supports O-DU 1315 and O-RU 1316 functions with an Open Fronthaul interface between them.

The Open Fronthaul (OF) interface(s) is/are between O-DU 1315 and 0-RU 1316 functions. The OF interface(s) includes the Control User Synchronization (CUS) Plane and Management (M) Plane. Figs. 12 and 13 also show that the 0-RU 1316 terminates the OF M-Plane interface towards the O-DU 1315 and optionally towards the SMO 1302. The O-RU 1316 terminates the OF CUS-Plane interface towards the O-DU 1315 and the SMO 1302.

The Fl-c interface connects the O-CU-CP 1321 with the O-DU 1315. As defined by 3GPP, the Fl-c interface is between the gNB-CU-CP and gNB-DU nodes. However, for purposes of O-RAN, the Fl-c interface is adopted between the O-CU-CP 1321 with the O-DU 1315 functions while reusing the principles and protocol stack defined by 3GPP and the definition of interoperability profile specifications.

The Fl-u interface connects the O-CU-UP 1322 with the O-DU 1315. As defined by 3GPP, the F l-u interface is between the gNB-CU-UP and gNB-DU nodes. However, for purposes of O-RAN, the Fl-u interface is adopted between the O-CU-UP 1322 with the O-DU 1315 functions while reusing the principles and protocol stack defined by 3 GPP and the definition of interoperability profile specifications.

The NG-c interface is defined by 3GPP as an interface between the gNB-CU-CP and the AMF in the 5GC. The NG-c is also referred as the N2 interface. The NG-u interface is defined by 3GPP, as an interface between the gNB-CU-UP and the UPF in the 5GC. The NG-u interface is referred as the N3 interface. In O-RAN, NG-c and NG-u protocol stacks defined by 3 GPP are reused and may be adapted for O-RAN purposes.

The X2-c interface is defined in 3GPP for transmitting control plane information between eNBs or between eNB and en-gNB in EN-DC. The X2-u interface is defined in 3GPP for transmitting user plane information between eNBs or between eNB and en-gNB in EN-DC. In O-RAN, X2-c and X2-u protocol stacks defined by 3 GPP are reused and may be adapted for O- RAN purposes

The Xn-c interface is defined in 3GPP for transmitting control plane information between gNBs, ng-eNBs, or between an ng-eNB and gNB. The Xn-u interface is defined in 3GPP for transmitting user plane information between gNBs, ng-eNBs, or between ng-eNB and gNB. In O-RAN, Xn-c and Xn-u protocol stacks defined by 3GPP are reused and may be adapted for O-RAN purposes

The El interface is defined by 3GPP as being an interface between the gNB-CU- CP (e.g., gNB-CU-CP 3728) and gNB-CU-UP. In O-RAN, El protocol stacks defined by 3GPP are reused and adapted as being an interface between the O-CU-CP 1321 and the O-CU-UP 1322 functions.

The O-RAN Non-Real Time (RT) RAN Intelligent Controller (RIC) 1312 is a logical function within the SMO framework 402, 1302 that enables non-real-time control and optimization of RAN elements and resources; Al/machine learning (ML) workflow(s) including model training, inferences, and updates; and policy-based guidance of applications/features in the Near-RT RIC 1314.

The O-RAN near-RT RIC 1314 is a logical function that enables near-real-time control and optimization of RAN elements and resources via fine-grained data collection and actions over the E2 interface. The near-RT RIC 1314 may include one or more AI/ML workflows including model training, inferences, and updates.

The non-RT RIC 1312 can be an ML training host to host the training of one or more ML models. ML training can be performed offline using data collected from the RIC, O-DU 1315 and O-RU 1316. For supervised learning, non-RT RIC 1312 is part of the SMO 1302, and the ML training host and/or ML model host/actor can be part of the non-RT RIC 1312 and/or the near-RT RIC 1314. For unsupervised learning, the ML training host and ML model host/actor can be part of the non-RT RIC 1312 and/or the near-RT RIC 1314. For reinforcement learning, the ML training host and ML model host/actor may be co-located as part of the non-RT RIC 1312 and/or the near-RT RTC 1314. In some implementations, the non-RT RTC 1312 may request or trigger ML model training in the training hosts regardless of where the model is deployed and executed. ML models may be trained and not currently deployed.

In some implementations, the non-RT RIC 1312 provides a query-able catalog for an ML designer/developer to publish/install trained ML models (e.g., executable software components). In these implementations, the non-RT RIC 1312 may provide discovery mechanism if a particular ML model can be executed in a target ML inference host (MF), and what number and type of ML models can be executed in the MF. For example, there may be three types of ML catalogs made discoverable by the non-RT RIC 1312: a design-time catalog (e.g., residing outside the non-RT RIC 1312 and hosted by some other ML platform(s)), a training/deployment-time catalog (e.g., residing inside the non-RT RIC 1312), and a run-time catalog (e.g., residing inside the non-RT RIC 1312). The non-RT RIC 1312 supports necessary capabilities for ML model inference in support of ML assisted solutions running in the non-RT RIC 1312 or some other ML inference host. These capabilities enable executable software to be installed such as VMs, containers, etc. The non-RT RIC 1312 may also include and/or operate one or more ML engines, which are packaged software executable libraries that provide methods, routines, data types, etc., used to run ML models. The non-RT RIC 1312 may also implement policies to switch and activate ML model instances under different operating conditions.

The non-RT RIC 132 is able to access feedback data (e.g., FM and PM statistics) over the 01 interface on ML model performance and perform necessary evaluations. If the ML model fails during runtime, an alarm can be generated as feedback to the non-RT RIC 1312. How well the ML model is performing in terms of prediction accuracy or other operating statistics it produces can also be sent to the non-RT RIC 1312 over 01. The non-RT RIC 1312 can also scale ML model instances running in a target MF over the 01 interface by observing resource utilization in MF. The environment where the ML model instance is running (e.g., the MF) monitors resource utilization of the running ML model. This can be done, for example, using an ORAN-SC component called ResourceMonitor in the near-RT RIC 1314 and/or in the non-RT RIC 1312, which continuously monitors resource utilization. If resources are low or fall below a certain threshold, the runtime environment in the near-RT RIC 1314 and/or the non-RT RIC 1312 provides a scaling mechanism to add more ML instances. The scaling mechanism may include a scaling factor such as an number, percentage, and/or other like data used to scale up/down the number of ML instances. ML model instances running in the target ML inference hosts may be automatically scaled by observing resource utilization in the MF. For example, the Kubemetes^{®} (K8s) runtime environment typically provides an auto-scaling feature.

The Al interface is between the non-RT RIC 1312 (within or outside the SMO 1302) and the near-RT RIC 1314. The Al interface supports three types of services, including a Policy Management Service, an Enrichment Information Service, and ML Model Management Service. Al policies have the following characteristics compared to persistent configuration: Al policies are not critical to traffic; Al policies have temporary validity; Al policies may handle individual UE or dynamically defined groups of UEs; Al policies act within and take precedence over the configuration; and Al policies are non-persistent, i.e., do not survive a restart of the near-RT RIC.

Various embodiments may be implemented fully or partially in software and/or firmware. This software and/or firmware may take the form of instructions contained in or on a non-transitory computer-readable storage medium. Those instructions may then be read and executed by one or more processors to enable performance of the operations described herein. The instructions may be in any suitable form, such as but not limited to source code, compiled code, interpreted code, executable code, static code, dynamic code, and the like. Such a computer-readable medium may include any tangible non-transitory medium for storing information in a form readable by one or more computers, such as but not limited to read only memory (ROM); random access memory (RAM); magnetic disk storage media; optical storage media; a flash memory, etc.

The word "exemplary" is used herein to mean "serving as an example, instance, or illustration." Any embodiment described herein as "exemplary" is not necessarily to be construed as preferred or advantageous over other embodiments. The terms "computing device," "user device," "communication station," "station," "handheld device," "mobile device," "wireless device" and "user equipment" (UE) as used herein refers to a wireless communication device such as a cellular telephone, a smartphone, a tablet, a netbook, a wireless terminal, a laptop computer, a femtocell, a high data rate (HDR) subscriber station, an access point, a printer, a point of sale device, an access terminal, or other personal communication system (PCS) device. The device may be either mobile or stationary.

As used within this document, the term "communicate" is intended to include transmitting, or receiving, or both transmitting and receiving. This may be particularly useful in claims when describing the organization of data that is being transmitted by one device and received by another, but only the functionality of one of those devices is required to infringe the claim. Similarly, the bidirectional exchange of data between two devices (both devices transmit and receive during the exchange) may be described as "communicating," when only the functionality of one of those devices is being claimed. The term "communicating" as used herein with respect to a wireless communication signal includes transmitting the wireless communication signal and/or receiving the wireless communication signal. For example, a wireless communication unit, which is capable of communicating a wireless communication signal, may include a wireless transmitter to transmit the wireless communication signal to at least one other wireless communication unit, and/or a wireless communication receiver to receive the wireless communication signal from at least one other wireless communication unit.

As used herein, unless otherwise specified, the use of the ordinal adjectives "first," "second," "third," etc., to describe a common object, merely indicates that different instances of like objects are being referred to and are not intended to imply that the objects so described must be in a given sequence, either temporally, spatially, in ranking, or in any other manner.

The term "access point" (AP) as used herein may be a fixed station. An access point may also be referred to as an access node, a base station, an evolved node B (eNodeB), or some other similar terminology known in the art. An access terminal may also be called a mobile station, user equipment (UE), a wireless communication device, or some other similar terminology known in the art. Embodiments disclosed herein generally pertain to wireless networks. Some embodiments may relate to wireless networks that operate in accordance with one of the IEEE 802.11 standards.

Some embodiments may be used in conjunction with various devices and systems, for example, a personal computer (PC), a desktop computer, a mobile computer, a laptop computer, a notebook computer, a tablet computer, a server computer, a handheld computer, a handheld device, a personal digital assistant (PDA) device, a handheld PDA device, an on-board device, an off-board device, a hybrid device, a vehicular device, a non-vehicular device, a mobile or portable device, a consumer device, a non-mobile or non-portable device, a wireless communication station, a wireless communication device, a wireless access point (AP), a wired or wireless router, a wired or wireless modem, a video device, an audio device, an audio-video (A/V) device, a wired or wireless network, a wireless area network, a wireless video area network (WVAN), a local area network (LAN), a wireless LAN (WLAN), a personal area network (PAN), a wireless PAN (WPAN), and the like.

Some embodiments may be used in conjunction with one way and/or two-way radio communication systems, cellular radio-telephone communication systems, a mobile phone, a cellular telephone, a wireless telephone, a personal communication system (PCS) device, a PDA device which incorporates a wireless communication device, a mobile or portable global positioning system (GPS) device, a device which incorporates a GPS receiver or transceiver or chip, a device which incorporates an RFID element or chip, a multiple input multiple output (MIMO) transceiver or device, a single input multiple output (SIMO) transceiver or device, a multiple input single output (MISO) transceiver or device, a device having one or more internal antennas and/or external antennas, digital video broadcast (DVB) devices or systems, multistandard radio devices or systems, a wired or wireless handheld device, e.g., a smartphone, a wireless application protocol (WAP) device, or the like.

Some embodiments may be used in conjunction with one or more types of wireless communication signals and/or systems following one or more wireless communication protocols, for example, radio frequency (RF), infrared (IR), frequency-division multiplexing (FDM), orthogonal FDM (OFDM), time-division multiplexing (TDM), time-division multiple access (TDMA), extended TDMA (E-TDMA), general packet radio service (GPRS), extended GPRS, code-division multiple access (CDMA), wideband CDMA (WCDMA), CDMA 2000, single-carrier CDMA, multi-carrier CDMA, multi-carrier modulation (MDM), discrete multi-tone (DMT), Bluetooth^{®}, global positioning system (GPS), Wi-Fi, Wi-Max, ZigBee, ultra-wideband (UWB), global system for mobile communications (GSM), 2G, 2.5G, 3G, 3.5G, 4G, fifth generation (5G) mobile networks, 3GPP, long term evolution (LTE), LTE advanced, enhanced data rates for GSM Evolution (EDGE), or the like. Other embodiments may be used in various other devices, systems, and/or networks.

The following examples pertain to further embodiments.

Example 1 may include a device for replacing bits in an isochronous data stream from a first data port to a second data port, the device comprising processing circuitry coupled to storage, the processing circuitry configured to: inject, using a first port, based on a periodicity less than a defined frame rate of a data stream comprising multiple frames, a status or control bit in place of one or more low-order bits, reserved bits, or unused bits of a frame of the data stream, wherein the frame comprises one or more data words; receive, using a second port synchronized to the periodicity, the data stream from the first port; extract, using the second port, based on the periodicity, the status or control bit; and extract, using the second port, a remainder of the frame.

Example 2 may include the device of example 1 and/or any other examples herein, wherein the first port and the second port are low-voltage differential interfaces.

Example 3 may include the device of example 1 and/or any other examples herein, wherein the data stream uses a JESD204B/C/D protocol or successor versions.

Example 4 may include the device of example 1 and/or any other examples herein, wherein the data stream is a radio frequency data stream.

Example 5 may include the device of example 1 and/or any other examples herein, wherein the data stream comprises audio frequency data.

Example 6 may include the device of example 1 and/or any other examples herein, wherein to inject the status or control bit is further based on an overload signal received in addition to the frame prior to injecting the status or control bit.

Example 7 may include the device of example 1 and/or any other examples herein, wherein to inject the status or control bit and wherein to extract the status or control bit are based on a control input to indicate that no status or control bits need to be injected to or extracted from each frame of the data stream.

Example 8 may include the device of example 1 and/or any other examples herein, wherein the data stream further comprises a second frame to which no status or control bit is injected, based on the periodicity.

Example 9 may include the device of example 1 and/or any other examples herein, wherein the processing circuitry is further configured to: round the frame from a first number of bits to a second number of bits less than the first number of bits when the status or control bit is injected; and replace the status or control bit with a zero after the extraction.

Example 10 may include the device of example 1 and/or any other examples herein, wherein the processing circuitry is further configured to: replace the status or control bit with a random binary pattern after the extraction.

Example 11 may include the device of example 1 and/or any other examples herein, wherein the status or control bit is injected into an in-phase (I) word of the frame, and wherein the at processing circuitry is further configured to: inject, based on a second periodicity different than the periodicity, a second status or control bit into a quadrature (Q) word of the frame.

Example 12 may include a non-transitory computer-readable storage medium comprising instructions to cause processing circuitry of a device for replacing bits in an isochronous data stream from a first data port to a second data port, upon execution of the instructions by the processing circuitry, to: inject, by a first port, based on a periodicity less than a defined frame rate of a data stream comprising multiple frames, a status or control bit in place of one or more low-order bits, reserved bits, or unused bits of a frame of the data stream, wherein the frame comprises one or more data words; receive, by a second port synchronized to the periodicity, the data stream from the first port; extract, by the second port, based on the periodicity, the status or control bit; and extract, by the second port, a remainder of the frame.

Example 13 may include the non-transitory computer-readable medium of example 12 and/or any other examples herein, wherein the first port and the second port are low-voltage differential interfaces.

Example 14 may include the non-transitory computer-readable medium of example 12 and/or any other examples herein, wherein to inject the status or control bit is further based on an overload signal received in addition to the frame prior to injecting the status or control bit.

Example 15 may include the non-transitory computer-readable medium of example 12 and/or any other examples herein, wherein execution of the instructions further causes the processing circuitry to: round the frame from a first number of bits to a second number of bits less than the first number of bits when the status or control bit is injected; and replace the status or control bit with a zero after the extraction

Example 16 may include the non-transitory computer-readable medium of example 12 and/or any other examples herein, wherein execution of the instructions further causes the processing circuitry to: replace the status or control bit with a random binary pattern after the extraction.

Example 17 may include the non-transitory computer-readable medium of example 12 and/or any other examples herein, wherein the status or control bit is injected into an in-phase (I) word of the frame, and wherein execution of the instructions further causes the processing circuitry to: inject, based on a second periodicity different than the periodicity, a second status or control bit into a quadrature (Q) word of the frame.

Example 18 may include a method for replacing bits in an isochronous data stream from a first data port to a second data port, the method comprising: injecting, by a first port of a device, based on a periodicity less than a defined frame rate of a data stream comprising multiple frames, a status or control bit in place of one or more low-order bits, reserved bits, or unused bits of a frame of the data stream, wherein the frame comprises one or more data words; receiving, by a second port of a device, the data stream from the first port, wherein the second port is synchronized to the periodicity; extracting, by the second port, based on the periodicity, the status or control bit; and extracting, by the second port, a remainder of the frame.

Example 19 may include the method of example 18 and/or any other examples herein, wherein the first port and the second port are low-voltage differential interfaces.

Example 20 may include the method of example 18 and/or any other examples herein, wherein the data stream uses a JESD204B/C/D protocol or successor versions.

Embodiments according to the disclosure are in particular disclosed in the attached claims directed to a method, a storage medium, a device and a computer program product, wherein any feature mentioned in one claim category, e.g., method, can be claimed in another claim category, e.g., system, as well. The dependencies or references back in the attached claims are chosen for formal reasons only. However, any subject matter resulting from a deliberate reference back to any previous claims (in particular multiple dependencies) can be claimed as well, so that any combination of claims and the features thereof are disclosed and can be claimed regardless of the dependencies chosen in the attached claims. The subject-matter which can be claimed comprises not only the combinations of features as set out in the attached claims but also any other combination of features in the claims, wherein each feature mentioned in the claims can be combined with any other feature or combination of other features in the claims. Furthermore, any of the embodiments and features described or depicted herein can be claimed in a separate claim and/or in any combination with any embodiment or feature described or depicted herein or with any of the features of the attached claims.

The foregoing description of one or more implementations provides illustration and description, but is not intended to be exhaustive or to limit the scope of embodiments to the precise form disclosed. Modifications and variations are possible in light of the above teachings or may be acquired from practice of various embodiments.

Certain aspects of the disclosure are described above with reference to block and flow diagrams of systems, methods, apparatuses, and/or computer program products according to various implementations. It will be understood that one or more blocks of the block diagrams and flow diagrams, and combinations of blocks in the block diagrams and the flow diagrams, respectively, may be implemented by computer-executable program instructions. Likewise, some blocks of the block diagrams and flow diagrams may not necessarily need to be performed in the order presented, or may not necessarily need to be performed at all, according to some implementations.

These computer-executable program instructions may be loaded onto a special-purpose computer or other particular machine, a processor, or other programmable data processing apparatus to produce a particular machine, such that the instructions that execute on the computer, processor, or other programmable data processing apparatus create means for implementing one or more functions specified in the flow diagram block or blocks. These computer program instructions may also be stored in a computer-readable storage media or memory that may direct a computer or other programmable data processing apparatus to function in a particular manner, such that the instructions stored in the computer-readable storage media produce an article of manufacture including instruction means that implement one or more functions specified in the flow diagram block or blocks. As an example, certain implementations may provide for a computer program product, comprising a computer-readable storage medium having a computer-readable program code or program instructions implemented therein, said computer-readable program code adapted to be executed to implement one or more functions specified in the flow diagram block or blocks. The computer program instructions may also be loaded onto a computer or other programmable data processing apparatus to cause a series of operational elements or steps to be performed on the computer or other programmable apparatus to produce a computer-implemented process such that the instructions that execute on the computer or other programmable apparatus provide elements or steps for implementing the functions specified in the flow diagram block or blocks.

Accordingly, blocks of the block diagrams and flow diagrams support combinations of means for performing the specified functions, combinations of elements or steps for performing the specified functions and program instruction means for performing the specified functions. It will also be understood that each block of the block diagrams and flow diagrams, and combinations of blocks in the block diagrams and flow diagrams, may be implemented by special-purpose, hardware-based computer systems that perform the specified functions, elements or steps, or combinations of special-purpose hardware and computer instructions.

Conditional language, such as, among others, "can," "could," "might," or "may," unless specifically stated otherwise, or otherwise understood within the context as used, is generally intended to convey that certain implementations could include, while other implementations do not include, certain features, elements, and/or operations. Thus, such conditional language is not generally intended to imply that features, elements, and/or operations are in any way required for one or more implementations or that one or more implementations necessarily include logic for deciding, with or without user input or prompting, whether these features, elements, and/or operations are included or are to be performed in any particular implementation.

Many modifications and other implementations of the disclosure set forth herein will be apparent having the benefit of the teachings presented in the foregoing descriptions and the associated drawings. Therefore, it is to be understood that the disclosure is not to be limited to the specific implementations disclosed and that modifications and other implementations are intended to be included within the scope of the appended claims. Although specific terms are employed herein, they are used in a generic and descriptive sense only and not for purposes of limitation.

## Claims

1. A device for replacing bits in an isochronous data stream from a first data port to a second data port, the device comprising processing circuitry coupled to storage, the processing circuitry configured to:
add, using a first port, based on a periodicity less than a defined frame rate of a data stream comprising multiple frames, a status or control bit in one or more low-order bits, reserved bits, or unused bits of a frame of the data stream, wherein the frame comprises one or more data words;
receive, using a second port synchronized to the periodicity, the data stream from the first port;
extract, using the second port, based on the periodicity, the status or control bit; and
extract, using the second port, a remainder of the frame.

2. The device of claim 1, wherein the first port and the second port are low-voltage differential interfaces.

3. The device of claim 1, wherein the data stream uses a JESD protocol.

4. The device of claim 1, wherein the data stream is a radio frequency data stream.

5. The device of claim 1, wherein the data stream comprises audio frequency data.

6. The device of claim 1, wherein the processing circuitry is further configured to:
identify an overload signal received in addition to the frame,
wherein to add the status or control bit is based on receiving the overload signal.

7. The device of claim 1, wherein to add the status or control bit and wherein to extract the status or control bit are based on a control input to indicate that no status or control bits need to be added to or extracted from each frame of the data stream.

8. The device of claim 1, wherein the data stream further comprises a second frame to which no status or control bit is added, based on the periodicity.

9. The device of any one of claims 1-8, wherein the processing circuitry is further configured to:
round the frame from a first number of bits to a second number of bits less than the first number of bits when the status or control bit is added; and
replace the status or control bit with a zero after the extraction.

10. A computer-readable storage medium comprising instructions to cause processing circuitry of a device for replacing bits in an isochronous data stream from a first data port to a second data port, upon execution of the instructions by the processing circuitry, to:
add, by a first port, based on a periodicity less than a defined frame rate of a data stream comprising multiple frames, a status or control bit in one or more low-order bits, reserved bits, or unused bits of a frame of the data stream, wherein the frame comprises one or more data words;
receive, by a second port synchronized to the periodicity, the data stream from the first port;
extract, by the second port, based on the periodicity, the status or control bit; and
extract, by the second port, a remainder of the frame.

11. The computer-readable medium of claim 10, wherein the first port and the second port are low-voltage differential interfaces.

12. The computer-readable medium of claim 10, wherein execution of the instructions further causes the processing circuitry to:
identify an overload signal received in addition to the frame,
wherein to add the status or control bit is based on receiving the overload signal.

13. The computer-readable medium of any one of claims 10-12, wherein execution of the instructions further causes the processing circuitry to:
round the frame from a first number of bits to a second number of bits less than the first number of bits when the status or control bit is added; and
replace the status or control bit with a zero after the extraction.

14. A method for replacing bits in an isochronous data stream from a first data port to a second data port, the method comprising:
adding, by a first port of a device, based on a periodicity less than a defined frame rate of a data stream comprising multiple frames, a status or control bit in one or more low-order bits, reserved bits, or unused bits of a frame of the data stream, wherein the frame comprises one or more data words;
receiving, by a second port of a device, the data stream from the first port, wherein the second port is synchronized to the periodicity;
extracting, by the second port, based on the periodicity, the status or control bit; and
extracting, by the second port, a remainder of the frame.

15. The method of claim 14, wherein the first port and the second port are low-voltage differential interfaces.
